# EUROPÄISCHE PATENTSCHRIFT

(11) **EP 0 346 742 B1**
(45) Veröffentlichungstag und Bekanntmachung des Hinweises auf die Patenterteilung: **06.09.1995**
(21) Anmeldenummer: 89110251.9
(22) Anmeldetag: 07.06.1989
(51) Int. Cl.: C08G 59/62, C08G 18/58, C09D 163/00, C08L 63/00, C08L 63/02, C08G 59/22

(54) **Stabile wässrige Epoxidharz-Dispersion, Verfahren zu deren Herstellung und deren Verwendung**
Stable aqueous epoxy resin dispersion, process for its preparation and its use
Dispersion aqueuse et stable de résine époxyde, son procédé de préparation et son application

(30) Priorität: 15.06.1988 DE 3820301
(43) Veröffentlichungstag der Anmeldung: 20.12.1989
(73) Patentinhaber: HOECHST AKTIENGESELLSCHAFT, 65926 Frankfurt am Main (DE)
(72) Erfinder: Becker, Wilhelm, Dr., D-2000 Hamburg 74 (DE); Godau, Claus, D-6229 Kiedrich (DE); Dreischhoff, Dieter, D-6200 Wiesbaden (DE)

(56) Entgegenhaltungen:
- EP-A- 0 081 163
- EP-A- 0 107 969
- US-A- 4 399 242
- CHEMICAL ABSTRACTS, vol. 83, no. 22, 1. Dezember 1975, Columbus, Ohio, US; abstract no. 180214T, "Urethane Modified Epoxy Resin Adhesive Compositions" Seite 45; & JP-A-7335232
- CHEMICAL ABSTRACTS, vol. 101, no. 10, September 1984, Columbus, Ohio,US; abstract no. 73616U, 'Aqueous Polyurethane Dispersions' Seite 36 ; & JP58219212

## Beschreibung

Es ist bekannt, Kunstharze durch Emulsionspolymerisation herzustellen und stabile wäßrige Dispersionen dieser Harze dadurch zu erzeugen, daß man das feste Harz und ein geeignetes Dispergiermittel unter Rühren in Wasser gibt. Bei Kondensaten wie Epoxidharzen, die schwierig durch Emulsionskondensation herstellbar sind, muß man wäßrige Dispersionen jedoch dadurch herstellen, daß man das Festharz in Wasser dispergiert. Solche Dispersionen sind im allgemeinen recht instabil und setzen sich schon innerhalb kurzer Zeit ab. Sie zeigen allgemein auch schlechtere filmbildende Eigenschaften. Diese Nachteile, nämlich niedrige Stabilität der Dispersion und schlechte Filmeigenschaften, werden hauptsächlich durch die hohe Teilchengröße des Harzes verursacht.

Die Herstellung von Überzugsmassen auf Basis von Polyepoxid-Dispersionen wird in der US-A-3.772.228 offenbart, wonach eine heißhärtende Einkomponenten-Überzugsmasse dadurch erzeugt wird, daß man ein festes, sprödes Polyepoxid, einen festen, spröden Epoxidhärter, z.B. ein Polyanhydrid, sowie gegebenenfalls einen Epoxidhärtungsbeschleuniger in einer Flüssigkeit, welche kein Lösungsmittel für die verschiedenen Komponenten darstellt, mahlt und dispergiert. Aliphatische Kohlenwasserstoffe werden dabei bevorzugt. Man erhält auf diese Weise Epoxidharz-Dispersionen, die jedoch nicht wäßrig sind und die der Verwendung von Kohlenwasserstoff-Lösungsmitteln innewohnende Gefahren mit sich bringen.

Die Herstellung stabiler wäßriger, von organischen Lösungsmitteln freien Dispersionen von Epoxidharzen verhältnismäßig niedrigen Molekulargewichts (200 bis 4 000, vorzugsweise 240 bis 1 300) mit mittleren Teilchengrößen von weniger als etwa 10 µm unter Anwendung von anionenaktiven, nichtionogenen, vorzugsweise jedoch kationenaktiven Dispergiermitteln ist ebenfalls bekannt (US-A-3.879.324). Hierbei wird das Epoxidharz bis zur Schmelze erhitzt, mit Wasser und dem Dispergiermittel vermischt und danach durch eine Kolloidmühle geführt. Nur solche Epoxidharze mit dem angegebenen Molekulargewicht, die unter 100°C, dem Siedepunkt des Wassers, schmelzen, lassen sich nach diesem Verfahren dispergieren. Diese scharfe Beschränkung hat den Nachteil, daß sie zahlreiche nützliche Epoxidharzsysteme hohen Molekulargewichts ausschließt. Abgesehen davon liefert die Dispergierung bei der Siedetemperatur des Wassers noch relativ große Teilchen, die sich schnell absetzen.

Es wurde auch schon die Herstellung von Epoxidfestharzen beschrieben (US-A-4.122.067), die auch direkt in Form einer wäßrigen Dispersion erhalten werden können. Dabei werden als Dispergiermittel Blockpolymere aus Ethylenoxid und Polypropylenglykol oder Polymere aus Polyethylenglykolen mit einem Molgewicht von 2 000 bis 20 000 und Polyglycidylethern von Polyphenolen mit einem Molgewicht von 300 bis 2 000 im Molverhältnis von 2:1 bis 6:5 eingesetzt. Auch nach diesem Verfahren erhält man nur Dispersionen mit einer Teilchengröße von 1 bis 3 µm.

Nach der EP-B-0 081 163 werden Polyalkylenglykol-Derivate als nichtionische Dispergiermittel für stabile, wäßrige Epoxidharz-Dispersionen eingesetzt, wobei durchschnittliche Teilchengrößen von kleiner als 1 µm möglich sind. Die mit diesen Dispersionen erhältlichen Überzüge befriedigen jedoch in einer Reihe von Eigenschaften noch nicht voll.

Nach der EP-A-0 051 483 werden Epoxidharz-Dispersionen aus selbstemulgierenden Epoxidharzen erhalten, die Polyoxyalkylenglykol-Glycidylether und gegebenenfalls noch ein Monoepoxid als reaktiven Verdünner enthalten. Als maximale Teilchengröße werden ca. 3 µm angegeben. Filme, die aus diesen Dispersionen und Härtungsmitteln hergestellt werden, haben durch den Gehalt an Polyoxyalkylenglykol-Glycidylethern, die sehr reaktionsträge sind, und gegebenenfalls Monoepoxiden, die als Kettenabbrecher wirken, eine relativ weiche Oberfläche.

Nach der US-A-4 399 242 wird das Epoxidharz bei ca. 120°C mit einem Diisocyanat umgesetzt, bevor es mit einem Diglycidylether eines Blockpolymeren aus Ethylenoxid und Propylenoxid als einzubauendem Emulgator versetzt und mit Wasser dispergiert wird. Die Größe der dispergierten Teilchen liegt gleichfalls in der Größenordnung von 1 bis 3 µm. Die Filmbildung ist unbefriedigend.

In der älteren EP-A-0 272 595 ist bereits eine wäßrige Dispersion auf Basis eines speziellen selbstemulgierenden Epoxidharzes vorgeschlagen worden, die gute Lagerstabilität bei gleichzeitig geringem Gehalt an organischen Lösungsmitteln aufweist und Überzüge mit guten Oberflächeneigenschaften ergibt. Unter bestimmten Bedingungen neigt diese Dispersion jedoch zur Hautbildung.

Die Erfindung betrifft nunmehr eine wäßrige Dispersion auf Basis eines selbstemulgierenden Epoxidharzes A), wobei die Dispersion neben Wasser B) gegebenenfalls bis zu 15 Gew.-%, bezogen auf die gesamte Dispersion, organischer Lösungsmittel C) und gegebenenfalls übliche Zusatzstoffe D) enthält, wobei das selbstemulgierende Epoxidharz A) ein Epoxidäquivalentgewicht zwischen 250 und 10 000 aufweist und ein Kondensationsprodukt darstellt aus
a) 50 bis 80, vorzugsweise 55 bis 70 Gew.-% einer Epoxidverbindung mit mindestens zwei Epoxidgruppen pro Molekül und einem Epoxidäquivalentgewicht von 100 bis 2000,
b) 35 bis 17, vorzugsweise 35 bis 20 Gew.-% eines aromatischen Polyols und
c) 15 bis 3, vorzugsweise 9 bis 4 Gew.-% eines Kondensationsproduktes aus einem aliphatischen Polyol mit einem mittleren Molekulargewicht (Mw) von 200 bis 20 000, einer Epoxidverbindung mit mindestens zwei Epoxidgruppen pro Molekül und einem Epoxidäquivalentgewicht von 100 bis 2000 sowie aus einem Mono- und/oder Polyisocyanat, wobei das Äquivalentverhältnis der OH-Gruppen zu den Epoxidgruppen 1:0,85 bis 1:3,5 ist, die Menge an Mono- und/oder Polyisocyanat 0,05 bis 5 Gew.-%, bezogen auf die Menge aus aliphatischem Polyol und Epoxidverbindung beträgt, und das Epoxidäquivalentgewicht dieses Kondensationsproduktes mindestens 200 beträgt.

Die Erfindung betrifft weiterhin ein Verfahren zur Herstellung dieser Epoxidharz-Dispersionen, dadurch gekennzeichnet, daß zunächst das selbstemulgierende Epoxidharz A) durch Kondensation der drei Komponenten A(a), A(b) und A(c) bei erhöhten Temperaturen in Gegenwart eines Kondensationskatalysators und gegebenenfalls organischer Lösungsmittel C) hergestellt wird, anschließend gegebenenfalls weitere, organische Lösungsmittel C) zugegeben werden und danach zu der so erhaltenen Lösung bei 30 bis 100°C entsprechende Mengen Wasser sowie gegebenenfalls die Verbindungen entsprechend D) unter kräftigem Rühren zugegeben werden.

Schließlich hat die Erfindung auch noch die Verwendung dieser Epoxidharz-Dispersionen zur Herstellung von Anstrichmaterialien, Überzügen, Formmassen und härtbaren Massen zum Gegenstand.

Das selbstemulgierende Epoxidharz entsprechend A) der erfindungsgemäßen Dispersion besitzt vorzugsweise ein Epoxidäquivalentgewicht von 350 bis 2 500, insbesondere von 450 bis 1500. Die mittlere Teilchengröße des dispergierten Harzes ist in der Regel nicht höher als 1,0 µm und beträgt vorzugsweise 0,3 bis 1,0 µm und insbesondere 0,3 bis 0,8 µm. Der Anteil dieses Harzes in der Gesamtdispersion beträgt im allgemeinen etwa 20 bis 70 Gew.-%, vorzugsweise etwa 25 bis 55 Gew.-%.

Bei den 1,2-Epoxidverbindungen entsprechend Aa) und Ac), handelt es sich um Polyepoxide mit im Mittel mindestens zwei Epoxidgruppen pro Molekül. Diese Epoxidverbindungen können dabei sowohl gesättigt als auch ungesättigt sowie aliphatisch, cycloaliphatisch, aromatisch oder heterocyclisch sein und auch Hydroxylgruppen aufweisen. Sie können weiterhin solche Substituenten enthalten, die unter den Mischungs- oder Reaktionsbedingungen keine störenden Nebenreaktionen verursachen, beispielsweise Alkyl- oder Arylsubstitutenten, Äthergruppierungen und ähnliche.

Vorzugsweise handelt es sich bei diesen Epoxidverbindungen um Polyglycidylether auf Basis von mehrwertigen, vorzugsweise zweiwertigen Alkoholen, Phenolen Hydrierungsprodukten dieser Phenole und/oder von Novolaken (Umsetzungsprodukte von ein- oder mehrwertigen Phenolen mit Aldehyden, insbesondere Formaldehyd in Gegenwart saurer Katalysatoren). Die Epoxidäquivalentgewichte dieser Epoxidverbindungen liegen vorzugsweise zwischen 160 und 500, insbesondere zwischen 170 und 250. Als mehrwertige Phenole sind beispielsweise zu nennen: Resorcin, Hydrochinon, 2,2-Bis-(4-hydroxyphenyl)-propan (Bisphenol A), Isomerengemische des Dihydroxydiphenylmethans (Bisphenol F), Tetrabrombisphenol A, 4,4′-Dihydroxydiphenylcyclohexan, 4,4′-Dihydroxy-3,3′-dimethyldiphenylpropan, 4,4′-Dihydroxydiphenyl, 4,4′-Dihydroxybenzophenol, Bis-(4-hydroxyphenyl)-1,1-äthan, Bis-(4-hydroxyphenyl)-1,1-isobutan, Bis-(4-hydroxy-tert.-butylphenyl)-2,2-propan, Bis-(2-hydroxynaphthyl)-methan, 1,5-Dihydroxynaphthalin, Tris-(4-hydroxyphenyl)-methan, Bis-(4-hydroxyphenyl-)ether, Bis-(4-hydroxyphenyl-)sulfon u.a. sowie die Chlorierungs- und Bromierungsprodukte der vorstehend genannten Verbindungen. Bisphenol A ist hierbei besonders bevorzugt.

Auch die Polyglycidylether von mehrwertigen Alkoholen sind geeignet. Als Beispiele derartiger mehrwertiger Alkohole seien Äthylenglykol, Diäthylenglykol, Triäthylenglykol, 1,2-Propylenglykol, Polyoxypropylenglykole (n = 1-10), 1,3-Propylenglykol, 1,4-Butylenglykol, 1,5-Pentandiol, 1,6-Hexandiol, 1,2,6-Hexantriol, Glycerin und Bis-(4-hydroxycyclohexyl)-2,2-propan genannt.

Es können auch Polyglycidylester von Polycarbonsäuren verwendet werden, die man durch die Umsetzung von Epichlorhydrin oder ähnlichen Epoxyverbindungen mit einer aliphatischen, cycloaliphatischen oder aromatischen Polycarbonsäure, wie Oxalsäuren, Bernsteinsäure, Adipinsäure, Glutarsäure, Phthalsäure, Terephthalsäure, Hexahydrophthalsäure, 2,6-Naphthalindicarbonsäure und dimerisierte Linolensäure, erhält. Beispiele sind Adipinsäurediglycidylester, Phthalsäurediglycidylester und Hexahydrophthalsäurediglycidylester.

Eine ausführliche Aufzählung der geeigneten Epoxidverbindungen findet sich in dem Handbuch "Epoxidverbindungen und Epoxidharze" von A.M. Paquin, Springer Verlag, Berlin 1958, Kapitel IV und in Lee, Neville "Handbook of Epoxy Resins", 1967, Chapter 2. Es können auch Mischungen von mehreren Epoxidverbindungen verwendet werden.

Als aromatische Polyole entsprechend A(b), kommen vorzugsweise die OH-gruppenhaltigen, aromatische Ringe enthaltenden Verbindungen in Frage wie vorstehend bei den Komponenten A(a) und A(c) beschrieben, also beispielsweise mehrwertige, vorzugsweise zweiwertige Phenole, deren Chlorierungs-, Bromierungsprodukte und/oder Novolake. Bevorzugt sind die OH-Gruppen direkt an den aromatischen Ring gebunden. Besonders bevorzugt ist auch hier Bisphenol A.

Bei den aliphatischen Polyolen der Komponente Ac) handelt es sich vorzugsweise um Polyetherpolyole (Polyalkylenglykole) mit mittleren Molekulargewichten (M̅w; Gelpermeationschromatographie; Polystyrolstandard) von bevorzugt 600 bis 12000, insbesondere 2000 bis 8000 und OH-Zahlen zweckmäßigerweise von 10 bis 200, bevorzugt 15 bis 60. Diese Polyetherpolyole besitzen vorzugsweise nur endständige, primäre OH-Gruppen. Beispielsweise seien hier Blockcopolymere aus Äthylenoxyd und Propylenoxyd sowie Polyäthylen-, Polypropylen-, Polybutylenglykole genannt, wobei auch Gemische der jeweiligen Polyalkylenglykole eingesetzt werden können. Vorzugsweise werden Polyethylenglykole verwendet.

Vorzugsweise beträgt bei dem Kondensationsprodukt Ac) das Äquivalentverhältnis der OH-Gruppen zu den Epoxidgruppen entweder c₁) 1:0,85 bis 1:1,5, insbesondere 1:0,95 bis 1:1,20 und das Epoxidäquivalentgewicht mindestens 100.000, vorzugsweise 100 000 bis 400 000, oder c₂) das Äquivalentverhältnis liegt bei 1:1,8 bis 1:3,5, insbesondere 1:2,0 bis 1:2,6 und das Epoxidäquivalentgewicht zwischen 400 und 10 000.

Dieses Kondensationsprodukt A(c) kann z.B. durch Kondensation der genannten Polyetherpolyole mit den Polyglycidylethern in Gegenwart beispielsweise folgender spezifischer Katalysatoren c₁) bei erhöhter Temperatur, im allgemeinen bei 50 bis 200, vorzugsweise 90 bis 150°C, gewonnen werden:
Bortrifluorid und seine Komplexe, z.B. mit Wasser, Phosphorsäure, Essigsäure (1:1 und 1:2), Methanol, Diethylether, Tetrahydrofuran, Phenol, Trikresylphosphat, Ethylenglykolmonoethylether, Polyethylenglykol (MG 200), Dimethylsulfoxyd, Di-n-Butylether, Di-n-Hexylether und Bernsteinsäure, oder Tetrafluorborsäure in wäßriger oder organischer Lösung. Es eignen sich jedoch auch Lewis-Säuren auf anderer Basis, wie SnCl₄. Bevorzugt werden von diesen Katalysatoren BF₃-Diethylether, BF₃-Essigsäure und Tetrafluorborsäure eingesetzt. Die Menge an Katalysator beträgt im allgemeinen 0,1 bis 5, vorzugsweise 0,15 bis 1 Gew.-%, bezogen auf das Reaktionsgemisch. Zur besseren Dosierung kann der Katalysator in einem Lösungsmittel wie Diethylether, einem Glykol- oder cyclischen Ether, Ketonen oder dergleichen, vorzugsweise Dioxan oder Methylisobutylketon bis zu 0,5 bis 20, vorzugsweise 2,5 bis 12,5 Gew.-% verdünnt werden.

Die beiden Komponenten werden dabei in solchen Mengen eingesetzt, daß das Äquivalentverhältnis von OH-Gruppen zu Epoxidgruppen im allgeminen 1:0,85 bis 1:1,5, vorzugsweise 1:0,95 bis 1:1,20 beträgt.

Bevorzugte Kondensationsprodukte (Dispergiermittel) A(c) sind solche aus den oben beschriebenen Epoxidverbindungen, insbesondere Polyglycidylethern von Bisphenolen, mit aliphatischen Polyolen, wobei das Epoxidäquivalentgewicht dieser Kondensationsprodukte bei Einsatz der Katalysatoren c₁) mindestens 50 000, vorzugsweise mindestens 100 000 beträgt und insbesondere zwischen 100 000 und 400 000, liegt.

Verwendet man als spezifische Katalysatoren BF₃ in Form von stabileren Komplexen (→ c₂), z.B. komplexiert mit Aminen, werden zur Herstellung der Kondensationsprodukte A(c) die beiden Komponenten zweckmäßigerweise solche Mengen eingesetzt, daß das Äquivalentverhältnis von OH-Gruppen zu Epoxidgruppen 1:1,8 bis 1:3,5, vorzugsweise 1:2,0 bis 1:2,6 beträgt. Geeignete Katalysatoren für diese Verfahrenweise sind BF₃-Aminkomplexe die in dem Reaktionsgemisch löslich sind und in denen das den Komplex bildende Amin einen pK_{b}-Wert in wäßriger Lösung von 15 bis 4,5 hat. Geeignete BF₃-Aminkomplexe sind beispielsweise diejenigen, die aus folgenden Aminen (pK_{b}-Werte in Klammern) und BF₃ gebildet werden:
n-Amylamin (10,63), Anilin (4,63), β-Phenylalanin = 2-Aminoethylbenzol (9,84), 2-Ethylbenzimidazol (6,18), Benzylamin (9,33), tans-Bornylamin (10,17), 1-Amino-3-methylbutan (10,60), 1,4-Diaminobutan (11,15), n-Butylamin (10,77), t-Butylamin (10,83), n-Butylcyclohexylamin (11,23), Cyclohexylamin (10,66), n-Decylamin (10,64), Diethylamin (10,49), Diisobutylamin (10,91), Diisopropylamin (10,96), Dimethylamin (10,73), n-Dodecanamin = Laurylamin (10,63), 2-Aminoethanol (9,50) Ethylamin (10,81), Hexadecanamin (10,63), 1-Aminohepten (10,66), 2-Aminoheptan (10,88), n-Hexylamin (10,56), 2,4-Dimethylimidazol (8,36), Morpholin (8,33), Methylamin (10,66), n-Nonylamin (10,64), Octadecanamin (10,60), Octylamin (10,65), 3-Aminopentan (10,59), 3-Amino-3-methylpentan (11,01), n-Pentadecylamin (10,61), Piperazin (9,83), Propylamin (10,71), Pyrrolidin (11,27), Tetradecanamin = Myristylamin (10,62), Tridecanamin (10,63), Triethylamin (11,01), Trimethylamin (9,81).

Bevorzugt werden BF₃-Benzylamin, BF₃-Monoethylamin, BF₃-Propylamin und BF₃-n-Butylamin eingesetzt. Sehr geeignet sind aber auch durch Modifizierung in eine flüssige Form gebrachten BF₃-Amin-Komplexe, wie sie z.B. von der der Firma Anchor Chemical Ltd. (Manchester) unter der Bezeichnung "Anchor" 1040 (15-16 % BF₃ enthaltend) oder "Anchor" 1171 (11-12 % BF₃ enthaltend) in den Handel gebracht werden.

Die Umsetzung der Hydroxylgruppen mit den Epoxidgruppen kann im Temperaturbereich von 20 bis 200°C vorgenommen werden. Die Umsetzungstemperatur ist abhängig von dem jeweiligen BF₃-Aminkomplex. Beispielsweise liegt die Umsetzungstemperatur bei Verwendung von BF₃-Monoethylamin oder BF₃-Benzylamin bei 130 bis 140°C, bei Verwendung von verflüssigtem Aminkomplex um 170°C. Man erwärmt deshalb zweckmäßiger Weise die umzusetzenden Gemische aus Hydroxylgruppen und Epoxidgruppen enthaltenden Verbindungen bis zu derjenigen Temperatur, bei der die Umsetzung mit ausreichender Geschwindigkeit, d.h. in 30 Minuten bis 5 Stunden, abläuft. Die Umsetzung verfolgt man zweckmäßig über die Zunahme des Epoxidäquivalents, das eine Verminderung der Epoxidgruppen anzeigt. Die Reaktion kann durch Kühlung unter die Reaktionstemperatur abgebrochen werden. Ein Teil des BF₃-Amin-Komplexes wird während der Reaktion durch Einbau der Fluoridionen in das Umsetzungsprodukt verbraucht. Ein etwaiger Überschuß des BF₃-Amin-Komplexes kann nach Reaktionsablauf durch Zugabe von basisch wirkenden Substanzen wie Bleicherde, Calciumoxid, Calciumhydroxid, Bariumoxid und Bariumhydroxid im Überschuß zum Komplex unschädlich gemacht werden. Die basisch wirkenden Substanzen werden zusammen mit den aus ihnen und den BF₃-Aminkomplexen entstehenden Produkten durch Filtration entfernt.

Die Menge an diesen Katalysatoren c₂) beträgt im allgemeinen ebenfalls 0,1 bis 5, vorzugsweise 0,15 bis 1 Gew.-%, bezogen auf das Reaktionsgemisch. Zur besseren Dosierung kann der Katalysator in einem geeigneten Lösungsmittel bis zu 0,5 bis 10, vorzugsweise 2,5 bis 12,5 Gew.-% verdünnt werden.

Bevorzugte Kondensationsprodukte (Dispergiermittel) A(c) unter Verwendung der Katalysatoren c₂) sind solche aus den vorstehend beschriebenen Epoxidverbindungen, insbesondere Polyglycidylethern von Bisphenolen, mit aliphatischen Polyolen, wobei das Epoxidäquivalentgewicht dieser Kondensationsprodukte zwischen 200 und 120 000, vorzugsweise 400 und 10 000, liegt.

Als Monoisocyanate zur Herstellung der Komponente Ac) kommen beispielsweise solche in Frage, die von Haus nur eine Isocyanat-Gruppe besitzen, wie Methylisocyanat, Ethylisocyanat, die Propylisocyanate, die Butylisocyanate, n-Dodecylisocyanat, Phenylisocyanat, α-Naphthylisocyanat udgl. Darüber hinaus sind hier auch teilverkappte, noch eine freie NCO-Gruppe aufweisende Polyisocyanate zu nennen. Als Polyisocyanate sind die nachstehend genannten Verbindungen geeignet. Bei den Verkappungsmitteln handelt es sich vorzugsweise um aliphatische, cycloaliphatische oder alkylaromatische einwertige Alkohole z.B. niedere aliphatische Alkohole wie Methyl-, Äthylalkohol, die verschiedenen Propyl-, Butyl- und Hexylalkohole, Heptyl, Octyl-, Nonyl-, Decyl-, Dodecylalkohol und ähnliche; Methoxy (1- bzw. 2-) propanol; ferner ungesättigte Alkohole wie Allylalkohol und Propargolalkohol, cycloaliphatische Alkohole wie Cyclopentanol, Cyclohexanol, alkylaromatische Alkohole wie Benzylalkohol, Methyl- sowie p-Methoxy- und p-Nitrobenzylalkohol und Monoäther von Glykolen, wie Ethylen-glykolmonomethyläther, -monoethyläther, -monobutyläther oder die entsprechenden Monoäther des Propylenglykols. Bevorzugt sind hierbei Ethylglykol, 2-Ethylhexanol, Butyldiglykol, Butylglykol und Benzylalkohol und dabei insbesondere die Alkohole, die flüssige Halburethane bilden.

Als Poly-, vorzugsweise Diisocyanate sind die üblichen, auf dem Polyurethan- bzw. Lackgebiet bekannten Polyisocyanate einsetzbar, beispielsweise aliphatische, cycloaliphatische oder aromatische Polyisocyanate. Typische Beispiele für die derartigen Polyisocyanate sind:
Toluylendiisocyanat-(2,4) sowie dessen technische Gemische mit Toluylendiisocyanat-(2,6), Toluylendiisocyanat-(2,6), Diphenylmethandiisocyanat-(4,4′), 1,6-Hexamethylendiisocyanat, Naphthylendiisocyanat-(1,5), m-Xylylendiisocyanat, 1-Methyl-2,4-diisocyanato-cyclohexan, Isophorondiisocyanat, 2,4,4-Trimethyl-1,6-diisocyanatohexan, dimeres Toluylendiisocyanat-(2,4), N,N′-Di-(4-methyl-3-isocyanatophenyl)-harnstoff, N,N′,N˝Tri-(6-isocyanato-hexyl)-biuret, Triphenylmethantriisocyanat-(4,4′4˝), das Umsetzungsprodukt aus 3 Mol Toluylendiisocyanat (2,4) und 1 Mol 1,1,1-Trimethylolpropan, Tri- und Polymerisationsprodukte von Toluylendiisocyanat-(2,4), Mischtrimerisations- und Mischpolymerisationsprodukte von Toluylendiisocyanat-(2,4) und 1,6-Hexamethylendiisocyanat, Gemische isomerer Diphenylmethandiisocyanate, mehr als zwei jeweils über Methangruppen verknüpfte Benzolkerne enthaltende Polyisocyanate und Diisocyanate mit Diphenylmethanstruktur, deren Isocyanatgruppen teilweise in Carbodiimidgruppen übergeführt sind.

Als Isocyanate werden bevorzugt Phenylisocyanat, die Isomeren bzw. ihre Gemische des Toluylendiisocyanats, Isophorondiisocyanat und die Isomeren bzw. ihre Gemische des Trimethylhexamethylendiisocyanats eingesetzt.

Die Umsetzung mit den genannten Isocyanaten kann im Temperaturbereich von 50 bis 140°C, bevorzugt 110 bis 135°C in einem Zeitraum von 15 bis 400 Min., bevorzugt 30 bis 60 Minuten, gegebenenfalls in Gegenwart von gegenüber Isocyanaten inerten Lösungsmitteln und von Katalysatoren erfolgen. Bei Poly(Di)isocyanaten ist dabei durch Wahl geeigneter Reaktionsbedingungen, insbesondere der Mengenverhältnisse, dafür Sorge zu tragen, daß keine Gelierung eintritt.

Gegenüber Isocyanaten inerte Lösungsmittel, die nach beendeter Umsetzung gegebenenfalls durch Destillation entfernt werden, sind beispielsweise Ester, wie Äthylacetat, Butylacetat, Methylglykolacetat und Äthylglykolacetat, Ketone wie Methyläthylketon, Methylisobutylketon, Aromaten wie Toluol, Xylol und höhere Aromatengemische sowie Gemische der genannten Lösungsmittel. Bevorzugt sind Toluol oder Xylol.

Bei den obengenannten Katalysatoren handelt es sich um die in der Isocyanatchemie gebräuchlichen Katalysatoren, wie z.B. tert. Amine und/oder Verbindungen des zwei- und vierwertigen Zinns wie Diazobicyclooctan (DABCO), Zinn(II)octoat, Dibutylzinnoxid, Dibutylzinndioctoat, Dibutylzinndilaurat, u.a.,Bevorzugt ist hierbei Dibutylzinndilaurat.

Die Menge an Isocyanat liegt bei 0,05 bis 5 Gew.-%, vorzugsweise bei 0,1 bis 2,5 Gew.-% und insbesondere bei 0,1 bis 1,0 Gew.-%, bezogen auf aliphatisches Polyol und Epoxidverbindung in Ac). In Gegenwart von Katalysatoren und bei Einsatz von Poly(Di)isocyanaten können dabei geringere Mengen verwendet werden als beim Arbeiten ohne Katalysatoren bzw. bei Einsatz von Monoisocyanaten. Das Isocyanat reagiert dabei mit den OH-Gruppen des Reaktionsprodukts aus aliphatischem Polyol und Epoxidverbindung (die gegebenenfalls schon OH-Gruppen enthalten kann) sowie unter Umständen auch mit den Epoxidgruppen, die in diesem Reaktionsprodukt noch vorhanden sind. Dabei ist zu beachten, daß nach der Reaktion mit dem Isocyanat in Ac) noch eine genügende Zahl an reaktiven Gruppen (OH- und/oder Epoxidgruppen) vorhanden ist, um eine Umsetzung mit Aa) und Ab) zu ermöglichen.

Die Menge an Kondensationsprodukt A(c) im selbstemulgierenden Epoxidharz beträgt 3 bis 15 Gew.-%, vorzugsweise 4 bis 9 Gew.-%, bezogen auf das selbstemulgierende Epoxidharz.

Die Menge an Wasser in der erfindungsgemäßen Dispersion liegt zweckmäßigerweise bei etwa 30 bis 55 Gew.-%, vorzugsweise bei etwa 35 bis 50 Gew.-%, bezogen auf die Gesamtdispersion.

Als organische Lösungsmittel entsprechend der Komponente C) der erfindungsgemäßen Dispersion kommen insbesondere Ethylenglykol-Mono- bzw. Diether, Propylenglykol-Mono- bzw. Diether, Butylenglykol-Mono- bzw. Diether von Monoalkoholen mit einem gegebenenfalls verzweigten Alkylrest von 1 bis 6 Kohlenstoffatomen, aliphatische Alkohole mit gegebenenfalls verzweigten Alkylresten von 1 bis 12 Kohlenstoffatomen, araliphatische und cycloaliphatische Alkohole wie Benzylalkohol oder Cyclohexanol, Aromaten wie Xylol oder Ketone, wie Methylisobutylketon in Betracht, wobei diese Lösungsmittel einzeln oder im Gemisch eingesetzt werden können. Der Siedepunkt dieser Lösungsmittel liegt bevorzugt nicht über 210°C. Bevorzugt sind dabei Ethylglykol, Methylglykol, Methoxypropanol, Ethoxypropanol und/oder Benzylalkohol. Die erfindungsgemäße Epoxidharz-Dispersion enthält vorzugsweise etwa 2 bis 15, insbesondere etwa 4 bis 10 Gew.-% dieser organischen Lösungsmittel.

Als übliche Zusatzstoffe im Sinne von D), die eventuell in der erfindungsgemäßen Kombination vorhanden sein können, seien hier beispielsweise die üblichen Lackadditive wie Pigmente, Pigmentpasten, Antioxidantien, Verlauf- bzw. Verdickungsmittel, Entschäumer und/oder Netzmittel, Reaktivverdünner, Füllstoffe, Katalysatoren udgl. genannt. Diese Additive, die auch Härter und weitere härtbare Harze einschließen, können der Dispersion gegebenenfalls erst unmittelbar vor der Verarbeitung zugegeben werden.

Als Härter für die selbstemulgierenden Epoxidharze der Erfindung können die hierfür bekannten Härtungsmittel bzw. härtenden Verbindungen (Epoxidhärter) eingesetzt werden, wie basische Härtungsmittel (Aminhärter), beispielsweise Polyamine, Mannich-Basen, Addukte von Aminen an Polymeren, wie Polyepoxide und Polyamidoamine. Weiterhin können saure Härtungsmittel (Säurehärter) wie Polycarbonsäuren und ihre Anhydride, sowie mehrwertige Phenole Anwendung finden. Auch hydroxyl- und/oder aminogruppenhaltige Kunstharze wie Amin- oder Phenolharze sind für diesen Zweck geeignet.

Beispiele für basische Härtungsmittel, vorzugsweise für die Härtung bei Raumtemperatur oder niedrigeren Temperaturen (Aminkalthärter), die im allgemeinen im Äquivalentverhältnis Epoxidäquivalent:Aminwasserstoffäquivalent von 1:(0,75 bis 1,5) eingesetzt werden, sind Polyalkylenamine, wie Diethylentriamin, Triethylentetramin, Tetraethylenpentamin u.a., ferner 2,2,4- und/oder 2,4,4-Trimethylhexamethylendiamin, Bis-(3-aminopropyl)-methylamin, 1,4-Bis-(3-aminopropyl)-piperazin, N,N-Bis-(3-aminopropyl)-ethylendiamin sowie cycloaliphatische Amine wie 1,2- bzw. 1,3-Diaminocyclohexan, 1,4-Diamino-3,6-diethylcyclohexan, 1,2-Diamino-4-ethylcyclohexan, 1,4-Diamino-3,6-diethylcyclohexan, 1-Cyclohexyl-3,4-diaminocyclohexan, Isophorondiamin, 4,4′-Diaminodicyclohexylmethan, 4,4′-Diaminodicyclohexylpropan, 2,2-Bis-(4-aminocyclohexyl)-propan, 3,3′-Dimethyl-4,4′-diamino-dicyclohexylmethan, 3-Amino-1-cyclohexylaminopropan, 1,3- und 1,4-Bis-(aminomethyl)-cyclohexan.

Als araliphatische Amine werden insbesondere solche Amine eingesetzt, bei denen die Aminogruppen am aliphatsche Rest vorhanden sind, z.B. m- und p-Xylylendiamin oder deren Hydrierungsprodukte. Die Amine können allein oder als Gemische verwendet werden.

Geeignete Mannich-Basen werden durch Kondensation von Polyaminen, vorzugsweise Diethylentriamin, Triethylentetramin, Isophorondiamin, 2,2,4- bzw. 2,4,4-Trimethylhexamethylendiamin, 1,3- und 1,4-Bis(aminomethyl)cyclohexan, insbesondere m- und p-Xylylendiamin mit Aldehyden, vorzugsweise Formaldehyd und ein- oder mehrwertigen Phenolen mit mindestens einer aldehydreaktiven Kernstelle, z.B. die verschiedenen Kresole und Xylenole, p-tert.-Butylphenol, Resorcin, 4,4′-Dihydroxydiphenylmethan, 4,4′-Dihydroxydiphenyl-2,2-propan, vorzugsweise aber Phenol hergestellt.

Als Amin-Epoxyd-Addukte kommen beispielsweise Umsetzungsprodukte von Diaminen wie z.B. Ethylendiamin, Propylendiamin, Hexamethylendiamin, 2,2,4-, 2,4,4-Trimethylhexamethylendiamin, m-Xylylendiamin und/oder Bis(aminomethyl-)cyclohexan mit endständigen Epoxiden, wie z.B. Propylenoxid, Hexenoxid oder mit Glycidylethern wie Phenylglycidylether, Ethylhexylglycidylether, Butylglycidylether oder mit Glycidylestern, wie "Cardura E", oder Polyglycidylethern bzw. -estern, wie sie bei Aa) bzw. Ac) beschrieben sind, in Betracht.

Polyamidoamine, die für vorliegende Zwecke verwendet werden können, werden beispielsweise durch Umsatz von Polyaminen mit Polycarbonsäuren, wie dimerisierten Fettsäuren, erhalten.

Bevorzugt werden als Aminhärter neben den obigen Polyaminen die wasserlöslichen Polyoxypropylendiamine mit Molgewichten von 190 bis 2000 sowie die leicht in Wasser dispergierbaren Härtungsmittel, wie sie in der DE-A-23 32 177 und der EP-B-0 000 605 beschrieben sind, also z.B. modifizierte Amin-Addukte eingesetzt. Zur Vervollständigung der Durchhärtung können die aus diesen Dispersionen erhältlichen Beschichtungen auch 30 bis 120 Minuten auf 50 bis 120°C erhitzt werden.

Als saure Härtungsmittel, die üblicherweise im Äquivalentverhältnis Epoxidäquivalent:Carboxyläquivalent von 1:(0,75 bis 1,5) verwendet werden, eignen sich wasserlösliche Polycarbonsäuren, z.B. Cyclopentantetracarbonsäure, insbesondere Butantetracarbonsäuren wie Cyclobutantetracarbonsäure, vorzugsweise 1, 2, 3, 4-Butantetracarbonsäure, ferner Aconitsäure, Citronensäure oder gegebenenfalls Anhydride oder saure Ester dieser Säuren mit mehrwertigen Alkoholen mit 2 bis 12, vorzugsweise 2 bis 6 C-Atomen, wie Neopentylglykol, Glycerin, Trimethylol-äthan oder -propan, den Alkandiolen und deren Oligomeren, die gegebenenfalls eine oder mehrere Ätherbrücken enthalten, wie Äthylenglykol, Propan- und Butandiole, wobei die Ester stets mindestens 3 freie COOH-Gruppen aufweisen. Es ist auch möglich, saure Ester mit 3 oder mehr COOH-Gruppen von Pyromellithsäure, Trimellithsäure, Phthalsäure, Endomethylentetra- oder -hexahydrophthalsäure, Maleinsäure, Fumarsäure bzw. deren Anhydriden, sofern diese existieren, mit mehrwertigen Alkoholen, z.B. den vorstehend genannten, als Polycarbonsäure-Härter zu verwenden, sofern diese sauren Ester eine ausreichende Wasserlöslichkeit bzw. Wasserverdünnbarkeit besitzen. Hierbei ist zu beachten, daß zweiwertige Carbonsäuren mit mindestens dreiwertigen Alkoholen bzw. zweiwertige Alkohole mit mindestens dreiwertigen Carbonsäuren umgesetzt werden, um eine ausreichende Anzahl von COOH-Gruppen im sauren Ester zu erzielen.

Anstelle oder zusätzlich zu den vorstehend beschriebenen Härtern können zur Härtung auch Amin- und/oder Phenolharze Verwendung finden, in Mengen von 5 bis 50 Gew.-%, vorzugsweise 10 bis 35 Gew.-%, bezogen auf den Gesamtfeststoffgehalt. Gegebenenfalls wird der Dispersion dabei noch zusätzlich Wasser zugesetzt, so daß sich der Gesamtfeststoffgehalt auf 10 bis 80 Gew.-% einstellt. Beispiele für derartige Aminharze sind Aminaldehydharze, d.h. Kondensationsprodukte von Aldehyden mit Melamin (Melaminharze), Harnstoff (Harnstoffharze), Acetoguanamin (Acetoguanamin-Harze) oder ähnliche Verbindungen bzw. entsprechende Präkondensate. Bevorzugte Aldehydkondensationsprodukte des Melamins sind vor allem die Melamin-Methylol-Alkyläther, wobei die Alkylreste aus Methyl-, n- oder i-Butylgruppen, bevorzugt Methylgruppen bestehen, wie Hexamethoxymethylmelamin, Ethoxymethoxymethylmelamin, Monomethylolpentamethoxymethylenmelamin, Dimethylol-tetramethoxymethylenmelamin, Trimethyloltrimethoxymethylenmelamin und dergleichen mit weitgehend monomerer Struktur sowie entsprechende Oligomere oder polymere Produkte.

Als Phenolharz-Härter seien Resole, Formaldehyd-Phenolcarbonsäureharze und Phenolharzvorprodukte genannt, wobei die handelsüblichen verätherten, mit Wasser verdünnbaren Phenolharzresole bevorzugt sind. Gegebenenfalls kann man den Phenol- und/oder Aminharz enthaltenden Dispersionen auch saure Katalysatoren, wie p-Toluolsulfonsäure, Cyclohexansulfaminsäure, saures Butylphosphat und Phosphorsäure - gegebenenfalls auch als (Amin)Salze - zusetzen, um die Geschwindigkeit der Härtungsreaktion zu erhöhen, so daß man Filme oder Überzüge erzeugt, die bei niedrigerer Temperatur oder in kürzerer Zeit aushärten. Die Menge dieser sauren Katalysatoren beträgt z.B. bis zu 2 Gew.-%, bezogen auf Gesamtfeststoffgehalt.

Zusätzliche härtbare Harze im Sinne der Komponente D) sind beispielsweise in wäßrigen Medien dispergierbare Harze auf Basis von Hydroxylalkylacrylestern, Hydroxyalkyden, Polyestern, Epoxydharzen und dergleichen. Der Anteil dieser zusätzlichen Harze kann beispielsweise so bemessen werden, daß der Gesamtfeststoffgehalt des Gemisches etwa 10 bis 80, vorzugsweise 20 bis 40 Gew.-% beträgt. Durch den Zusatz solcher Harze können die Eigenschaften der aus den Dispersionen hergestellten Produkte in gewünschter Weise beeinflußt werden. So ist es beispielsweise möglich, durch die Gegenwart der Acrylatharze die Vergilbungsbeständigkeit und durch Zusatz von Alkydharzen die Elastizität der daraus hergestellten Überzüge zu verbessern.

Der Gesamtfeststoffgehalt der erfindungsgemäßen Epoxidharz-Dispersion kann zwischen etwa 10 bis 80 Gew.-% liegen und beträgt zweckmäßigerweise 35 bis 70 Gew.-%, vorzugsweise 45 bis 60 Gew.-%; ihre Viskosität liegt im allgemeinen zwischen 300 und 30000 mPa·s, vorzugsweise zwischen 1000 und 7000 mPa·s (20°C).
Die erfindungsgemäßen Epoxidharz-Dispersion zeichnet sich insbesondere durch ihre gute Lagerstabilität, vor allem bedingt durch die geringe mittlere Teilchengröße des selbstemulgierenden Epoxidharzes, bei gleichzeitig geringem Gehalt an organischen Lösungsmitteln aus. Die mit dieser Dispersion erhältlichen Überzüge besitzen außerdem eine verringerte Wasserempfindlichkeit bei verbesserter Härte.

Bie dem erfindungsgemäßen Verfahren zur Herstellung dieser Epoxidharz-Dispersionen wird zunächst das selbstemulgierende Epoxidharz A) durch Kondensation der drei Komponenten A(a), A(b) und A(c) bei erhöhten Temperaturen, im allgemeinen 120 bis 220°C, vorzugsweise 150 bis 180°C in Gegenwart eines Kondensationskatalysators hergestellt. Als solche kommen beispielsweise Phosphine, wie Triphenylphosphin, Phosphoniumsalze, wie z.B. Benzyltrimethylphosphoniumchlorid, tertiäre Amine, wie z.B. Benzyldimethylamin, quartäre Ammoniumsalze, wie z.B. Tetramethylammoniumchlorid, Alkalihydroxide, wie NaOH, LiOH, Alkalicarbonate, wie Natriumcarbonat, Lithiumcarbonat, Alkalisalze organischer Säuren wie Natriumformiat und Lithiumbenzoat, in Betracht. Bei dieser Kondensation kann auch bereits das organische Lösungsmittel C) ganz oder teilweise zugegeben sein.

Anschließend wird diesem Harz bei Temperaturen von 120°C bis 220°C, vorzugsweise 100 bis 160°C, das organische Lösungsmittel - sofern die Kondensation nicht schon in Anwesenheit der Gesamtmenge des organischen Lösungsmittels erfolgt ist - zugegeben und eine Lösung erzeugt. Danach wird bei Temperaturen von 30 bis 100°C, vorzugsweise 55 bis 85°C die entsprechende Menge an Wasser unter kräftigem Rühren zudosiert, wodurch die wäßrige Dispersion entsteht. Diese Dispergierung erfolgt zweckmäßig unter Verwendung eines schnell laufenden Flügelrührers, einer Kolloidmühle, eines Homogenisators oder eines sonstigen Schnellmischers hoher Scherkraft, zum Beispiel eines Dissolvers.

Die Verbindungen entsprechend D (Zusatzstoffe, Härter, weitere härtbare Harze) werden vorzugsweise erst unmittelbar vor der Anwendung der Dispersion zugegeben.

Die erfindungsgemäßen Dispersionen eignen sich in Verbindung mit geeigneten Härtungsmitteln vor allem zur Herstellung von Überzügen und/oder Zwischenbeschichtungen für die verschiedensten Anwendungsgebiete, insbesondere als Schutzüberzüge auf rauhen und porösen Substraten. Weiter eignen sie sich für Chemikalien- und witterungsbeständigen Beschichtungen und Auskleidungen von Gegenständen.

Aufgrund ihrer günstigen Eigenschaften sind die erfindungsgemäßen Dispersionen auch hervorragend für die Einschichtlackierung geeignet. Die haftende Überzugsschicht kann unverändert bleiben, sie kann aber auch als Zwichenschicht, also als Unterlage für weitere Überzüge dienen, die wiederum aus demselben oder einem anderen üblichen Beschichtungsmaterial bestehen können.

Wegen ihrer guten Verdünnbarkeit und ihrer anderen günstigen Eigenschaften eignen sich die erfindungsgemäßen Dispersionen auch zur zusätzlichen Verwendung bei der Elektrotauchlackierung.

Eine weitere Möglichkeit ist ihre Verwendung für wasserverdünnbare Klebstoffe. Auch als Bindemittel für textile, organische und/oder anorganische Materialien sind sie einsetzbar. Sie sind auch zur Verwendung für härtbare Formmassen geeignet. Daneben können sie auch als Zusatz von Kunststoffzementen dienen.

Im Falle des Einsatzes als Beschichtungsmittel (bzw. als überwiegend wäßriger Lack) erfolgt die Abscheidung auf dem Substrat, wie Metall, Holz, Glas, Beton, Kunststoff, Keramik etc., nach herkömmlichen Methoden, wie Streichen, Spritzen, Tauchen oder Aufwalzen. Die Überzüge werden, sofern keine Härter für die Kalthärtung mitverwendet werden, durch Erhitzen auf 100 bis 250°C für eine zum Aushärten ausreichende Zeit, im allgemeinen etwa fünf Minuten bis etwa eine Stunde, gehärtet.

In den nachstehenden Versuchen und Beispielen bedeutet % jeweils Gewichtsprozent. Die Viskosität wurde stets bei Raumtemperatur mit dem Brookfield-Viskosimeter gemessen.

### Beispiele

### I. Herstellung der Kondensationsprodukte (Dispergiermittel) A(c) mit Katalysator c₁)

In allen Beispielen 1 bis 11 wurde das Reaktionsgemisch nach Zugabe der BF₃-Verbindung auf 130°C erhitzt und diese Temperatur beibehalten, bis die Reaktion ausgeklungen war, kenntlich an einer Zunahme des Epoxydäquivalentgewichts auf den jeweils angegebenen Wert.
1) 309 g technisches Polyethylenglykol mit einem durchschnittlichen Molgewicht von 4000 und 32,5 g eines Polyglycidylethers auf Basis von Bisphenol A mit einem Epoxidäquivalentgewicht von 185 wurden zusammen auf 100°C erhitzt und unter Rühren mit 0,5 ml HBF₄, 50%ig in H₂O, mit 10 ml Methyl-isobutylketon verdünnt, versetzt. Das Äquivalentverhältnis OH/Epoxid betrug 1:1,15, das Epoxidäquivalentgewicht des Kondensates ca. 350000. Das Methyl-isobutylketon wurde unter Vakuum entfernt.
2) 285 g des Kondensates gemäß Beispiel 1 wurden bei 130°C in ca. 30 Min. mit einer Lösung von 2,85 g Toluylendiisocyanat (TDI 80 = 80 % 2,4-, 20 % 2,6-Isomeres), gelöst in 10 ml getrocknetem Xylol, versetzt. Xylol wurde nach einer Haltezeit von 60 Minuten bei 130°C in Vakuum entfernt. 50 gew.-%ig in Benzylalkohol gelöst, wies das Kondensat eine Viskosität von 12 170 mPa·s (25°C) auf.
3) 284 g des Kondensates gemäß Beispiel 1 wurden mit 1,42 g TDI-80, gelöst in 10 ml getrocknetem Xylol, bei 130°C in ca. 30 Min. versetzt. Xylol wurde nach einer Haltezeit von 60 Minuten bei 130°C im Vakuum entfernt. 50 gew.-%ig in Benzylalkohol gelöst, wies das Kondensat eine Viskosität von 8120 mPa·s (25°C) auf.
4) 280 g eines Kondensates entsprechend Beispiel 1, das 50 gew.-%ig in Benzylalkohol gelöst, eine Viskosität von 5530 mPa·s (25°C) aufwies, wurde bei 130°C in 30 Min. mit 0,7 g TDI-80, gelöst in 10 ml getrocknetem Xylol, versetzt. Xylol wurde nach einer Haltezeit von 60 Minuten bei 130°C im Vakuum entfernt. 50 gew.-%ig in Benzylalkohol gelöst, wies das Kondensat eine Viskosität von 9000 mPa·s (25°C) auf.
5) 281 g eines Kondensates entsprechend Beispiel 1, das 50 gew.-%ig in Benzylalkohol gelöst, eine Viskosität von 5530 mPa·s (25°C) aufwies, wurde bei 130°C in 30 Min. mit 2,81 g Phenylisocyanat, gelöst in 10 ml getrocknetem Xylol, versetzt. Xylol wurde nach einer Haltezeit von 60 Minuten bei 130°C im Vakuum entfernt. 50 gew.-%ig in Benzylalkohol gelöst, wies das Kondensat eine Viskosität von 5500 mPa·s (25°C) auf.
6) 247 g eines Kondensates entsprechend Beispiel 1, das 50 gew.-%ig in Benzylalkohol gelöst, eine Viskosität von 5530 mPa·s (25°C) aufwies, wurde bei 130°C mit 0,5 ml einer 1%igen Lösung von Dibutylzinndilaurat in Xylol und anschließend in 30 Min. mit 1,23 g TDI-80, gelöst in 15 ml getrocknetem Xylol versetzt. Xylol wurde nach einer Haltezeit von 60 Minuten bei 130°C in Vakuum entfernt. 50 gew.-%ig in Benzylalkohol gelöst, wies das Kondensat eine Viskosität von 7680 mPa·s (25°C) auf.
7) 231 g eines Kondensates entsprechend Beispiel 1, das 50 gew.-%ig in Benzylalkohol gelöst, eine Viskosität von 4750 mPa·s (25°C) aufwies, wurde bei 130°C mit 0,5 ml einer 1%igen Lösung von Dibutylzinndilaurat in Xylol und anschließend in 30 Min. mit 1,15 g Isophorondiisocyanat, gelöst in 15 ml getrocknetem Xylol, versetzt. Xylol wurde nach einer Haltezeit von 60 Minuten bei 130°C im Vakuum entfernt. 50 gew.-%ig in Benzylalkohol gelöst, wies das Kondensat eine Viskosität von 5730 mPa·s (25°C) auf.
8) 259 g eines Kondensates entsprechend Beispiel 1, das 50 gew.-%ig in Benzylalkohol gelöst, eine Viskosität von 5530 mPa·s (25°C) aufwies, wurde bei 130°C mit 0,5 ml einer 1%igen Lösung von Dibutylzinndilaurat in Xylol und anschließend in 30 Min. mit 1,30 g Trimethylhexamethylendiisocyanat (2,2,4-, 2,4,4-Isomerengemisch) gelöst in 15 ml getrocknetem Xylol versetzt. Xylol wurde nach einer Haltezeit von 60 Minuten bei 130°C im Vakuum entfernt. 50 gew.-%ig in Benzylalkohol gelöst, wies das Kondensat eine Viskosität von 7160 mPa·s (25°C) auf.
9) 259 g eines Kondensates entsprechend Beispiel 1, das 50 gew.-%ig in Benzylalkohol gelöst, eine Viskosität von 4750 mPa·s (25°C) aufwies, wurde bei 130°C mit 1,0 ml einer 1 %igen Lösung von Dibutylzinndilaurat in Xylol und anschließend in 30 Min. mit 2,6 g Phenylisocyanat, gelöst in 20 ml getrocknetem Xylol, versetzt. Xylol wurde nach einer Haltezeit von 60 Minuten bei 130°C im Vakuum entfernt. 50 gew.-%ig in Benzylalkohol gelöst, wies das Kondensat eine Viskosität von 4850 mPa·s (25°C) auf.
10) 185 g eines Kondensates entsprechend Beispiel 1, das 50 gew.-%ig in Benzylalkohol gelöst, eine Viskosität von 5530 mPa·s (25°C) aufwies, wurde bei 130°C mit 105 ml einer 1%igen Lösung von Dibutylzinndilaurat in Xylol und anschließend in 30 Min. mit 3,78 g Phenylisocyanat gelöst in 15 ml getrocknetem Xylol versetzt. Xylol wurde nach einer Haltezeit von 60 Minuten bei 130°C im Vakuum entfernt. 50 gew.-%ig in Benzylalkohol gelöst, wies das Kondensat eine Viskosität von 4240 mPa·s (25°C) auf.
11) Unter einer getrockneten N₂-Atmosphäre wurden 250 g TDI-80 auf 60°C unter Rühren erwärmt. 3 ml einer 1%igen Dibutylzinndilaurat-Lösung in Xylol wurden zugesetzt. In 120 Min. werden 129,5 g getrocknetes Äthylglykol zugesetzt. Anschließend hielt man noch weitere 120 Min. bei 60°C, bis der NCO-Gehalt dieses Halburethans 15 bis 16 Gew.-% betrug.
12) 220 g eines Kondensates entsprechend Beispiel 1, das 50 gew.-%ig in Benzylalkohol gelöst, eine Viskosität von 4490 mPa·s (25°C) aufwies, wurde bei 130°C mit 0,5 ml einer 1 %igen Lösung von Dibutylzinndilaurat in Xylol und anschließend in 30 Min. mit 4,42 g des obigen Halburethans, gelöst in 20 ml getrocknetem Xylol, versetzt. Xylol wurde nach einer Haltezeit von 60 Minuten bei 130°C im Vakuum entfernt. 50 gew.-%ig in Benzylalkohol gelöst, wies das Kondensat eine Viskosität von 5130 mPa·s (25°C) auf.

### II. Herstellung der Kondensationsprodukte (Dispergiermittel) A(c) mit den unter C₂ genannten Katalysatoren.

1) 500 g eines Polyethylenglykols mit einem durchschnittlichen Molgewicht von 4000 und 115,5 g eines Polyglycidylethers auf Basis von Bisphenol A mit einem Epoxidäquivalentgewicht von 185 wurden zusammen auf 120°C erhitzt. Man setzte 2 g des BF₃-Aminkomplexes "Anchor" 1040 zu und erwärmte auf 170°C. Das Epoxidäquivalent wurde überprüft. In drei Portionen wurden weitere 0,85 g des Aminkomplexes "Anchor" 1040 zugesetzt. Nach Erreichen des Epoxidäquivalentes von 1940, das eine um 20% höhere Kondensation der Reaktionspartner bedeutet als es dem Umsatz des Hydroxylgruppen des Polyethylenglykols entspricht, wurde die Umsetzung beendet. Das Äquivalentverhältnis OH/Epoxid betrug 1:2,5.
2) 500 g eines Polyethylenglykols mit einem durchschnittlichen Molgewicht von 4000 und 92,5 g eines Polyglycidylethers auf Basis von Bisphenol A mit einem Epoxidäquivalentgewicht von 185 wurden zusammen auf 120°C erhitzt. Man setzte 2 g BF₃-Monoethylamin zu und erwärmte auf 150°C. Das Epoxidäquivalent wurde überprüft. Nach Erreichen des Epoxidäquivalentes von 3140, das eine um 25 % höhere Kondensation der Reaktionspartner bedeutet als es dem Umsatz der Hydroxylgruppen des Polyethylenglykols entspricht, wurde die Umsetzung beendet. Das Äquivalentverhältnis OH/Epoxid betrug 1:2,0.
3) 250 g eines Kondensates entsprechend vorstehendem Beispiel 1 wurde bei 130°C mit 1,0 ml einer 1%igen Lösung von Dibutylzinndilaurat in Xylol und anschließend in 30 Min. mit 6,25 g TDI-80, gelöst in 40 ml getrocknetem Xylol, versetzt. Xylol wurde nach einer Haltezeit von 60 Min. bei 130°C im Vakuum entfernt. 50 Gew.-%ig in Benzylalkohol gelöst, wies das Kondensat eine Viskosität von 3750 mPa·s (25°C) und ein Epoxidäquivalent von 3750 auf.
4) 250 g eines Kondensates entsprechend vorstehendem Beispiel 2, das ein Epoxidäquivalent von 2400 aufwies, wurde bei 130°C in 30 Min. mit 250 g Isophorondiisocyanat, gelöst in 20 ml getrocknetem Xylol, versetzt. Xylol wurde nach einer Haltezeit von 60 Min. bei 130°C im Vakuum entfernt. 50 gew.-%ig in Benzylalkohol gelöst wies das Kondensat eine Viskosität von 880 mPa·s (25°C) auf.

### III. Beispiele zur Herstellung der erfindungsgemäßen Dispersion unter Verwendung der Kondensationsprodukte gemäß der Beispiele I. 2-11

1) In einem 2 l-Dreihalskolben, ausgerüstet mit Thermometer, Flügelrührer, Rückflußkühler und Tropftrichter, wurden 325 g eines Epoxidharzes auf Basis von Bisphenol A mit einem Epoxydäquivalent von 183 mit 98 g Bisphenol A und 27 g des Dispergiermittels I.2), gelöst in 27 g Benzylalkohol, in Gegenwart von 750 mg Triphenylphosphin bei 150 bis 170°C bis zu einem Epoxydäquivalent von 510-530 umgesetzt. Man verdünnte unter Abkühlung mit 60 g Methoxypropanol. Bei einer Rührgeschwindigkeit von ca. 800 Umdrehungen pro Minute und Senkung der Temperatur auf 70 - 60°C wurden in einem Zeitraum von 5 - 30 Min. gleichmäßig 85 g deionisiertes Wasser zugesetzt, wobei eine wäßrige Dispersion entstand, die anschließend mit 163 g deionisiertem Wasser weiter verdünnt wurde. Die Dispersion hatte einen Festgehalt von 53,7 Gew.-%, eine Viskosität von 4000 mPas (Brookfield, Spindel 2 bei 6 UpM) sowie eine Teilchengröße von 0,50 µm.
2) In einem 2 l-Dreihalskolben, ausgerüstet mit Thermometer, Flügelrührer, Rückflußkühler und Tropftrichter, wurden 325 g eines Epoxidharzes auf Basis von Bisphenol A mit einem Epoxydäquivalent von 183 mit 98 g Bisphenol A und 27 g des Dispergiermittels I.2) gelöst in 27 g Benzylalkohol, in Gegenwart von 750 mg Triphenylphosphin bei 150 bis 170°C bis zu einem Epoxydäquivalentgewicht von 520-530 umgesetzt. Man verdünnte unter Abkühlung mit 60 g Methoxypropanol. Bei einer Rührgeschwindigkeit von ca. 800 Umdrehungen pro Minute und Senkung der Temperatur auf 70 - 60°C wurden in einem Zeitraum von 5 - 30 Min. gleichmäßig 85 g deionisiertes Wasser zugesetzt, wobei eine wäßrige Dispersion entstand, die anschließend mit 170 g deionisiertem Wasser weiter verdünnt wurde. Die Dispersion hatte einen Festgehalt von 54,2 Gew.-%, eine Viskosität von 5200 mPas (Brookfield, Spindel 3 bei 6 UpM) sowie eine Teilchengröße von 0,45 µm.
3) In einem 2 l-Dreihalskolben, ausgerüstet mit Thermometer, Flügelrührer, Rückflußkühler und Tropftrichter, wurden 325 g eines Epoxidharzes auf Basis von Bisphenol A mit einem Epoxydäquivalentgewicht von 183 mit 120 g Bisphenol A und 27 g des Dispergiermittels I.4) gelöst in 27 g Benzylalkohol, in Gegenwart von 700 mg Triphenylphosphin bei 150 bis 170°C bis zu einem Epoxydäquivalentgewicht von 510-530 umgesetzt. Man verdünnte unter Abkühlen mit 60 g Methoxypropanol. Bei einer Rührgeschwindigkeit von ca. 800 Umdrehungen pro Minute und Senkung der Temperatur auf 70 - 60°C wurden in einem Zeitraum von 5 - 30 Min. gleichmäßig 85 g deionisiertes Wasser zugesetzt, wobei eine wäßrige Dispersion entstand, die anschließend mit ca. 215 g deionisiertem Wasser weiter verdünnt wurde. Die Dispersion hatte einen Festgehalt von 54,2 Gew.-%, eine Viskosität von 4900 mPas (Brookfield, Spindel 3 bei 6 UpM) sowie eine Teilchengröße von 0,46 µm.
4) In einem 2 l-Dreihalskolben, ausgerüstet mit Thermometer, Flügelrührer, Rückflußkühler und Tropftrichter, wurden 325 g eines Epoxidharzes auf Basis von Bisphenol A mit einem Epoxydäquivalentgewicht von 183 mit 120 g Bisphenol A und 27 g des Dispergiermittels I.5) gelöst in 27 g Benzylalkohol, in Gegenwart von 700 mg Triphenylphosphin bei 150 bis 170°C bis zu einem Epoxydäquivalentgewicht von 510-530 umgesetzt. Man verdünnte unter Abkühlen mit 60 g Methoxypropanol. Bei einer Rührgeschwindigkeit von ca. 800 Umdrehungen pro Minute und Senkung der Temperatur auf 70 - 60°C wurden in einem Zeitraum von 5 - 30 Min. gleichmäßig 85 g deionisiertes Wasser zugesetzt, wobei eine wäßrige Dispersion entstand, die anschließend mit ca. 215 g deionisiertem Wasser weiter verdünnt wurde. Die Dispersion hatte einen Festgehalt von 53,2 Gew.-%, eine Viskosität von 4950 mPas (Brookfield, Spindel 3 bei 6 UpM) sowie eine Teilchengröße von 0,50 µm.
5) In einem 2 l-Dreihalskolben, ausgerüstet mit Thermometer, Flügelrührer, Rückflußkühler und Tropftrichter, wurden 325 g eines Epoxidharzes auf Basis von Bisphenol A mit einem Epoxydäquivalentgewicht von 183 mit 120 g Bisphenol A und 27 g des Dispergiermittels I.6) gelöst in 27 g Benzylalkohol, in Gegenwart von 700 mg Triphenylphosphin bei 150 bis 170°C bis zu einem Epoxydäquivalentgewicht von 510-530 umgesetzt. Man verdünnte unter Abkühlen mit 60 g Methoxypropanol. Bei einer Rührgeschwindigkeit von ca. 800 Umdrehungen pro Minute und Senkung der Temperatur auf 70 - 60°C wurden in einem Zeitraum von 5 - 30 Min. gleichmäßig 85 g deionisiertes Wasser zugesetzt, wobei eine wäßrige Dispersion entstand, die anschließend mit ca. 215 g deionisiertem Wasser weiter verdünnt wurde. Die Dispersion hatte einen Festgehalt von 53,3 Gew.-%, eine Viskosität von 4250 mPas (Brookfield, Spindel 3 bei 6 UpM) sowie eine Teilchengröße von 0,45 µm.
6) In einem 2 l-Dreihalskolben, ausgerüstet mit Thermometer, Flügelrührer, Rückflußkühler und Tropftrichter, wurden 325 g eines Epoxidharzes auf Basis von Bisphenol A mit einem Epoxydäquivalentgewicht von 183 mit 120 g Bisphenol A und 27 g des Dispergiermittels I.7) gelöst in 27 g Benzylalkohol, in Gegenwart von 700 mg Triphenylphosphin bei 150 bis 170°C bis zu einem Epoxydäquivalentgewicht von 510-530 umgesetzt. Man verdünnte unter Abkühlen mit 60 g Methoxypropanol. Bei einer Rührgeschwindigkeit von ca. 800 Umdrehungen pro Minute und Senkung der Temperatur auf 70 - 60°C wurden in einem Zeitraum von 5 - 30 Min. gleichmäßig 85 g deionisiertes Wasser zugesetzt, wobei eine wäßrige Dispersion entstand, die anschließend mit ca. 215 g deionisiertem Wasser weiter verdünnt wurde. Die Dispersion hatte einen Festgehalt von 52,9 Gew.-%, eine Viskosität von 4500 mPas (Brookfield, Spindel 3 bei 6 UpM) sowie eine Teilchengröße von 0,39 µm.
7) In einem 2 l-Dreihalskolben, ausgerüstet mit Thermometer, Flügelrührer, Rückflußkühler und Tropftrichter, wurden 325 g eines Epoxidharzes auf Basis von Bisphenol A mit einem Epoxydäquivalentgewicht von 183 mit 120 g Bisphenol A und 27 g des Dispergiermittels I.8) gelöst in 27 g Benzylalkohol, in Gegenwart von 700 mg Triphenylphosphin bei 150 bis 170°C bis zu einem Epoxydäquivalentgewicht von 520-540 umgesetzt. Man verdünnte unter Abkühlen mit 60 g Methoxypropanol. Bei einer Rührgeschwindigkeit von ca. 800 Umdrehungen pro Minute und Senkung der Temperatur auf 70 - 60°C wurden in einem Zeitraum von 5 - 30 Min. gleichmäßig 85 g deionisiertes Wasser zugesetzt, wobei eine wäßrige Dispersion entstand, die anschließend mit ca. 215 g deionisiertem Wasser weiter verdünnt wurde. Die Dispersion hatte einen Festgehalt von 54,0 Gew.-%, eine Viskosität von 4700 mPas (Brookfield, Spindel 3 bei 6 UpM) sowie eine Teilchengröße von 0,42 µm.
8) In einem 2 l-Dreihalskolben, ausgerüstet mit Thermometer, Flügelrührer, Rückflußkühler und Tropftrichter, wurden 325 g eines Epoxidharzes auf Basis von Bisphenol A mit einem Epoxydäquivalentgewicht von 183 mit 120 g Bisphenol A und 27 g des Dispergiermittels I.9) gelöst in 27 g Benzylalkohol, in Gegenwart von 700 mg Triphenylphosphin bei 150 bis 170°C bis zu einem Epoxydäquivalentgewicht von 520-530 umgesetzt. Man verdünnte unter Abkühlen mit 60 g Methoxypropanol. Bei einer Rührgeschwindigkeit von ca. 800 Umdrehungen pro Minute und Senkung der Temperatur auf 70 - 60°C wurden in einem Zeitraum von 5 - 30 Min. gleichmäßig 85 g deionisiertes Wasser zugesetzt, wobei eine wäßrige Dispersion entstand, die anschließend mit ca. 215 g deionisiertem Wasser weiter verdünnt wurde. Die Dispersion hatte einen Festgehalt von 53,2 Gew.-%, eine Viskosität von 4950 mPas (Brookfield, Spindel 3 bei 12 UpM) sowie eine Teilchengröße von 0,50 µm.
9) In einem 2 l-Dreihalskolben, ausgerüstet mit Thermometer, Flügelrührer, Rückflußkühler und Tropftrichter, wurden 325 g eines Epoxidharzes auf Basis von Bisphenol A mit einem Epoxydäquivalentgewicht von 183 mit 120 g Bisphenol A und 27 g des Dispergiermittels I.10) gelöst in 27 g Benzylalkohol, in Gegenwart von 700 mg Triphenylphosphin bei 150 bis 170°C bis zu einem Epoxydäquivalentgewicht von 510-530 umgesetzt. Man verdünnte unter Abkühlen mit 60 g Methoxypropanol. Bei einer Rührgeschwindigkeit von ca. 800 Umdrehungen pro Minute und Senkung der Temperatur auf 70 - 60°C wurden in einem Zeitraum von 5 - 30 Min. gleichmäßig 85 g deionisiertes Wasser zugesetzt, wobei eine wäßrige Dispersion entstand, die anschließend mit ca. 215 g deionisiertem Wasser weiter verdünnt wurde. Die Dispersion hatte einen Festgehalt von 53,2 Gew.-%, eine Viskosität von 5000 mPas (Brookfield, Spindel 3 bei 12 UpM) sowie eine Teilchengröße von 0,44 µm.
11) In einem 2 l-Dreihalskolben, ausgerüstet mit Thermometer, Flügelrührer, Rückflußkühler und Tropftrichter, wurden 325 g eines Epoxidharzes auf Basis von Bisphenol A mit einem Epoxydäquivalentgewicht von 183 mit 120 g Bisphenol A und 27 g des Dispergiermittels I.4) gelöst in 27 g Benzylalkohol, in Gegenwart von 700 mg Triphenylphosphin bei 150 bis 170°C bis zu einem Epoxydäquivalentgewicht von 510-530 umgesetzt. Man verdünnte unter Abkühlen mit 60 g Methoxypropanol. Bei einer Rührgeschwindigkeit von ca. 800 Umdrehungen pro Minute und Senkung der Temperatur auf 70 - 60°C wurden in einem Zeitraum von 5 - 30 Min. gleichmäßig 85 g deionisiertes Wasser zugesetzt, wobei eine wäßrige Dispersion entstand, die anschließend mit ca. 215 g deionisiertem Wasser weiter verdünnt wurde. Die Dispersion hatte einen Festgehalt von 53,1 Gew.-%, eine Viskosität von 2575 mPas (Brookfield, Spindel 2 bei 12 UpM) sowie eine Teilchengröße von 0,53 µm.

### IV. Beispiele zur Herstellung der erfindungsgemäßen Dispersionen unter Verwendung der Kondensationsprodukte Beispiele II. 3 bis 4

1) In einem 2 l-Dreihalskolben, ausgerüstet mit Thermometer, Flügelrührer, Rückflußkühler und Tropftrichter, wurden 325 g eines Epoxidharzes auf Basis von Bisphenol A mit einem Epoxidäquivalentgewicht von 183 mit 98 g Bisphenol A und 27 g des Dispergiermittels II.3) gelöst in 27 g Benzylalkohol, in Gegenwart von 600 mg Triphenylphosphin bei 150 bis 160°C bis zu einem Epoxidäquivalentgewicht von ca. 530 umgesetzt. Man verdünnte unter Abkühlen mit 60 g Methoxypropanol. Unterhalb einer Temperatur von 70°C wurden bei einer Rührgeschwindigkeit von ca. 800 Umdrehungen pro Minute in einem Zeitraum von 5 Min. 85 g deionisiertes Wasser zugesetzt und verrührt, wobei eine wäßrige Dispersion entstand, die anschließend mit ca. 235 g deionisiertem Wasser weiter verdünnt wurde. Die Dispersion hatte einen Festgehalt von 53,0 Gew.-%, eine Viskosität von 650 mPa.s (Brookfield, Spindel 2 bei 30 UpM) sowie eine Teilchengröße 0,65 µm.
2) In einem 2 l-Dreihalskolben, ausgerüstet mit Thermometer, Flügelrührer, Rückflußkühler und Tropftrichter, wurden 325 g eines Epoxidharzes auf Basis von Bisphenol A mit einem Epoxidäquivalentgewicht von 183 mit 98 g Bisphenol A und 54 g des Dispergiermittels II.4), gelöst in 54 g Benzylalkohol, in Gegenwart von 600 mg Triphenylphosphin bei 150 bis 160°C bis zu einem Epoxidäquivalentgewicht von ca. 550 umgesetzt. Man verdünnte unter Abkühlen mit 33 g Methoxypropanol. Unterhalb einer Temperatur von 70°C wurden bei einer Rührgeschwindigkeit von ca. 800 Umdrehungen pro Minute in einem Zeitraum von 5 Min. 85 g deionisiertes Wasser zugesetzt und verrührt, wobei eine wäßrige Dispersion entstand, die anschließend mit ca. 230 g deionisiertem Wasser weiter verdünnt wurde. Die Dispersion hatte, auf einen Festgehalt von 52,9 Gew.-% verdünnt, eine Viskosität von 2900 mPa.s (Brookfield, Spindel 2 bei 12 UpM) sowie eine Teilchengröße von 0,62 µm.

Auf den offenstehenden Proben dieser Dispersionen bildet sich über einen Zeitraum von mehreren Stunden keine feste Haut aus. Die durch Verdunstung an der Oberfläche eingetretene viskositätsbedingte Eindickung ist wieder homogen verrührbar.

### V. Anwendungstechn. Prüfungen

Eine erfindungsgemäße Dispersion (→ Beispiel II.2) sowie eine Dispersion gemäß Stand der Technik (EP-A-0 081 163) wurden einer Reihe von anwendungstechnischen Prüfungen unterworfen. Das Ergebnis zeigen die beiden nachstehenden Tabellen 1 und 2.

**Tabelle 1**

| | Erfindungsgemäß (Beispiel III.7) | Vergleich (Dispersion gemäß EP-A-0081163, Bsp. 2) |
|---|---|---|
| Dispersion | 100 Teile | 100 Teile |
| Härtungsmittel gemäß Eur.P. 0 000 605, Bsp. 5c | 20 Teile | 20 Teile |
| Staubtrocken (RT): | 45 min | 110 min |
| Klebfrei (RT): | 110 min | 180 min |
| Pendelhärte (24h): | 75 s | 30 s |
| Pendelhärte ( 7d): | 145 s | 85 s |
| Filmtrübung nach: | 3,5 h | 3,0 h |
| Wasserbeständigkeit nach 24 h Lagerung: | 1 | 3 |
| 1. Staubtrocken: Auf den Film gestreute Glasperlen lassen sich nach der Aushärtung nicht mehr mit einem Pinsel entfernen. 2. Klebfrei: Die Glasperlen lassen sich nach der Aushärtung mit einem Pinsel entfernen. 3. Pendelhärte nach König: DIN 53 157 4. Filmtrübung: Filme werden nach dem Mischen von Dispersion und Härter halbstündlich auf Glasplatten in 200 µm Schichtdicke aufgezogen. Das Auftreten einer Trübung im Film ist das Prüfergebnis sowie das Ende der Verarbeitungszeit. 5. Wasserbeständigkeit nach 24 h, Lagerung bei Raumtemperatur: Auf Glasplatten mit 200 µm Schichtdicke aufgezogene Filme, werden nach 24 h Lagerung in H₂O bei Raumtemperatur geprüft. Skala: 0 = sehr gut, 5 = schlecht. | | |

**Tabelle 2**

| (Prüfung der Glanzstabilität) | | |
|---|---|---|
| | Erfindungsgemäß (Beispiel III.7) | Vergleich (Dispersion gemäß EP-A-0081163, Bsp. 2) |
| Dispersion | 100 Teile | 100 Teile |
| TiO₂ | 35,4 Teile | 32,6 Teile |
| Hexamethoxymethylmelamin | 0,7 Teile | 0,65 Teile |
| H₂O | 33 Teile | 25 Teile |
| Härtungsmittel gemäß Eur.P. 0 000 605, Bsp. 5c | 20,6 Teile | 19,0 Teile |
| Glanzstabilität* sofort | 97 | 63 |
| 30 min. | 100 | 69 |
| 1 h | 98 | 67 |
| 2 h | 93 | 59 |
| 3 h | 85 | 46 |
| 4 h | 47 | 38 |
| 5 h | 29 | - |

| | | |
|---|---|---|
| * gemäß DIN 67530; 60° ∢ | | |

## Patentansprüche (Patentansprüche für folgende(n) Vertragsstaat(en): AT, BE, CH, LI, DE, FR, GB, GR, IT, NL, SE)

1. Wäßrige Dispersion auf Basis eines selbstemulgierenden Epoxidharzes A), wobei die Dispersion neben Wasser B), gegebenenfalls bis zu 15 Gew.-%, bezogen auf die gesamte Dispersion, organischer Lösungsmittel C) und gegebenenfalls übliche Zusatzstoffe D) enthält, wobei das selbstemulgierende Epoxidharz A) ein Epoxidäquivalentgewicht zwischen 250 und 10 000 aufweist und ein Kondensationsprodukt darstellt aus
a) 50 bis 80 Gew.-% einer Epoxidverbindung mit mindestens zwei Epoxidgruppen pro Molekül und einem Epoxidäquivalentgewicht von 100 bis 2000
b) 35 bis 17 Gew.-% eines aromatischen Polyols und
c) 15 bis 3 Gew.-% eines Kondensationsproduktes aus einem aliphatischen Polyol mit einem mittleren Molekulargewicht (Mw) von 200 bis 20 000, einer Epoxidverbindung mit mindestens zwei Epoxidgruppen pro Molekül und einem Epoxidäquivalentgewicht von 100 bis 2000 sowie aus einem Mono- und/oder Polyisocyanat, wobei das Äquivalentverhältnis der OH-Gruppen zu den Epoxidgruppen 1:0,85 bis 1:3,5 ist, die Menge an Mono- und/oder Polyisocyanat 0,05 bis 5 Gew.-%, bezogen auf die Menge aus aliphatischem Polyol und Epoxidverbindung, beträgt
und das Epoxidäquivalentgewicht dieses Kondensationsproduktes zwischen 200 und mindestens 50 000 liegt.

2. Epoxidharz-Dispersion nach Anspruch 1, dadurch gekennzeichnet, daß die Menge des selbstemulgierenden Epoxidharzes 20 bis 70 Gew.-%, bezogen auf die gesamte Dispersion, und das Epoxidäquivalentgewicht 450 bis 2500 betragen.

3. Epoxidharz-Dispersion nach Anspruch 1 und/oder 2, dadurch gekennzeichnet, daß es sich bei den Epoxidverbindungen entsprechend A(a) und A(c) um Polyglycidylether auf Basis von mehrwertigen, vorzugsweise zweiwertigen Phenolen und/oder von Novolaken oder Polyglycidylester von Polycarbonsäuren handelt.

4. Epoxidharz-Dispersion nach Anspruch 3, dadurch gekennzeichnet, daß es sich bei den mehrwertigen Phenolen um Bisphenol A handelt.

5. Epoxidharz-Dispersion nach Anspruch 3 und/oder 4, dadurch gekennzeichnet, daß die Epoxidverbindungen Epoxidäquivalentgewichte von 170 bis 250 besitzen.

6. Epoxidharz-Dispersion nach einem oder mehreren der Ansprüche 1 bis 5, dadurch gekennzeichnet, daß das aromatische Polyol entsprechend A(b) ein mehrwertiges, vorzugsweise zweiwertiges Phenol darstellt.

7. Epoxidharz-Dispersion nach einem oder mehreren der Ansprüche 1 bis 6, dadurch gekennzeichnet, daß es sich bei den aliphatischen Polyolen entsprechend A(c) um Polyalkylenglykole mit Molgewichten (Mw) von 600 bis 12000 handelt.

8. Epoxidharz-Dispersion nach einem oder mehreren der Ansprüche 1 bis 7, dadurch gekennzeichnet, daß die Menge an Isocyanat 0,1 bis 1,0 Gew.-%, bezogen auf aliphatisches Polyol und Epoxidharz, beträgt.

9. Epoxidharz-Dispersion nach einem oder mehreren der Ansprüche 1 bis 8, dadurch gekennzeichnet, daß die Menge an A(c) 4 bis 9 Gew.-%, bezogen auf das gesamte selbstemulgierende Epoxidharz, beträgt.

10. Epoxidharz-Dispersion nach einem oder mehreren der Ansprüche 1 bis 8, dadurch gekennzeichnet, daß bei dem Kondensationsprodukt c) das Äquivalentverhältnis der OH-Gruppen zu den Epoxidgruppen entweder c₁) 1:0,85 bis 1:1,5, insbesondere 1:0,95 bis 1:1,20 und das Epoxidäquivalentgewicht mindestens 100 000 oder c₂) das Äquivalentverhältnis 1:1,8 bis 1:3,5, insbesondere 1:2,0 bis 1:2,6 und das Epoxidäquivalentgewicht 400 bis 10000 betragen.

11. Epoxidharz-Dispersion nach einem oder mehreren der Ansprüche 1 bis 10, dadurch gekennzeichnet, daß die Menge an B) 30 bis 55 Gew.-% beträgt.

12. Epoxidharz-Dispersion nach einem oder mehreren der Ansprüche 1 bis 11, dadurch gekennzeichnet, daß die Menge an C) 2 bis 15 Gew.-% beträgt.

13. Epoxidharz-Dispersion nach einem oder mehreren der Ansprüche 1 bis 12, dadurch gekennzeichnet, daß als organische Lösungsmittel entsprechend C) Ethylenglykol-Mono- oder Diether, Propylenglykol-Mono-oder Diether, Butylenglykol-Mono- oder Diether von Monoalkoholen mit einem gegebenenfalls verzweigten Alkylrest von 1 bis 6 Kohlenstoffatomen, aliphatische Alkohole mit gegebenenfalls verzweigten Alkylresten von 1 bis 12 Kohlenstoffatomen, araliphatische und cycloaliphatische Alkohole, Aromaten oder Ketone einzeln oder im Gemisch eingesetzt werden.

14. Epoxidharz-Dispersion nach einem oder mehreren der Ansprüche 1 bis 13, dadurch gekennzeichnet, daß als D) basische oder saure Härtungsmittel dienen.

15. Epoxidharz-Dispersion nach Anspruch 14, dadurch gekennzeichnet, daß es sich bei den basischen Härtungsmitteln um Aminhärter aus der Gruppe Polyoxypropylenamine, Polyglycidylether-Aminaddukten oder Polyamidoaminen handelt, wobei diese Aminhärter im Äquivalentverhältnis Epoxidäquivalent:Aminwasserstoffäquivalent von 1 : (0,75 bis 1,5) verwendet werden.

16. Epoxidharz-Dispersion nach einem oder mehreren der Ansprüche 1 bis 15, dadurch gekennzeichnet, daß als D) weitere härtbare Harze der Gruppe Amin- und/oder Phenolharze eingesetzt werden.

17. Epoxidharz-Dispersion nach einem oder mehreren der Ansprüche 1 bis 16, dadurch gekennzeichnet, daß die mittlere Teilchengröße des selbstemulgierenden Epoxidharzes 0,3 bis 0,8 µm beträgt.

18. Verfahren zur Herstellung der Epoxidharz-Dispersion nach einem oder mehreren der Ansprüche 1 bis 17, wobei zunächst das selbstemulgierende Epoxidharz A) durch Kondensation der drei Komponenten A(a), A(b) und A(c) bei erhöhten Temperaturen in Gegenwart eines Kondensationskatalysators und gegebenenfalls organischer Lösungsmittel C) hergestellt wird, anschließend gegebenenfalls weitere, organische Lösungsmittel C) zugegeben werden und danach zu der so erhaltenen Lösung bei 30 bis 100°C die entsprechende Menge Wasser B) sowie gegebenenfalls die Verbindungen entsprechend D) unter kräftigem Rühren zugegeben werden.

19. Verfahren nach Anspruch 18, dadurch gekennzeichnet, daß die Kondensation bei Temperaturen von 120 bis 220°C erfolgt und daß das organische Lösungsmittel C) bei Temperaturen von 120 bis 220°C zugegeben wird.

20. Verfahren nach Anspruch 18 und/oder 19, dadurch gekennzeichnet, daß die Zugabe der Verbindungen entsprechend D) erst unmittelbar vor der Anwendung erfolgt.

21. Verwendung der Epoxidharz-Dispersion nach einem oder mehreren der Ansprüche 1 bis 17 zur Herstellung von Anstrichmaterialien, Überzügen, Formmassen und härtbaren Massen.

## Patentansprüche (Patentansprüche für folgende(n) Vertragsstaat(en): ES)

1. Verfahren zur Herstellung einer wäßrigen Dispersion auf Basis eines selbstemulgierenden Epoxidharzes A), wobei die Dispersion neben Wasser B), gegebenenfalls bis zu 15 Gew.-%, bezogen auf die gesamte Dispersion, organischer Lösungsmittel C) und gegebenenfalls übliche Zusatzstoffe D) enthält und wobei das selbstemulgierende Epoxidharz A) ein Epoxidäquivalentgewicht zwischen 250 und 10 000 aufweist und ein Kondensationsprodukt darstellt aus
a) 50 bis 80 Gew.-% einer Epoxidverbindung mit mindestens zwei Epoxidgruppen pro Molekül und einem Epoxidäquivalentgewicht von 100 bis 2000
b) 35 bis 17 Gew.-% eines aromatischen Polyols und
c) 15 bis 3 Gew.-% eines Kondensationsproduktes aus einem aliphatischen Polyol mit einem mittleren Molekulargewicht (M̅w) von 200 bis 20 000, einer Epoxidverbindung mit mindestens zwei Epoxidgruppen pro Molekül und einem Epoxidäquivalentgewicht von 100 bis 2000 sowie aus einem Mono- und/oder Polyisocyanat, wobei das Äquivalentverhältnis der OH-Gruppen zu den Epoxidgruppen 1:0,85 bis 1:3,5 ist, die Menge an Mono- und/oder Polyisocyanat 0,05 bis 5 Gew.-%, bezogen auf die Menge aus aliphatischem Polyol und Epoxidverbindung, beträgt und das Epoxidäquivalentgewicht dieses Kondensationsproduktes zwischen 200 und mindestens 50 000 liegt, wobei
zunächst das selbstemulgierende Epoxidharz A) dadurch Kondensation der drei Komponenten A(a), A(b) und A(c) bei erhöhten Temperaturen in Gegenwart eines Kondensationskatalysators und gegebenenfalls organischer Lösungsmittel C) hergestellt wird, anschließend gegebenenfalls weitere organische Lösungsmittel C) zugegeben werden und danach zu der so erhaltenen Lösung bei 30 bis 100°C die entsprechende Menge Wasser B), sowie gegebenenfalls die Verbindungen entsprechend D), unter kräftigem Rühren zugegeben werden.

2. Verfahren nach Anspruch 1, dadurch gekennzeichnet, daß die Kondensation bei Temperaturen von 120 bis 220°C erfolgt und daß das organische Lösungsmittel C) bei Temperaturen von 120 bis 220°C zugegeben wird.

3. Verfahren nach Anspruch 1 und/oder 2, dadurch gekennzeichnet, daß die Zugabe der Verbindungen entsprechend D) erst unmittelbar vor der Anwendung erfolgt.

4. Verfahren nach einem oder mehreren der Ansprüche 1 bis 3, dadurch gekennzeichnet, daß die Menge des selbstemulgierenden Epoxidharzes 20 bis 70 Gew.-%, bezogen auf die gesamte Dispersion, und das Epoxidäquivalentgewicht 450 bis 2500 betragen.

5. Verfahren nach einem oder mehreren der Ansprüche 1 bis 4, dadurch gekennzeichnet, daß es sich bei den Epoxidverbindungen entsprechend A(a) und A(c) um Polyglycidylether auf Basis von mehrwertigen, vorzugsweise zweiwertigen Phenolen und/oder von Novolaken oder Polyglycidylester von Polycarbonsäuren handelt.

6. Verfahren nach Anspruch 5, dadurch gekennzeichnet, daß es sich bei den mehrwertigen Phenolen um Bisphenol A handelt.

7. Verfahren nach Anspruch 5 und/oder 6, dadurch gekennzeichnet, daß die Epoxidverbindungen Epoxidäquivalentgewichte von 170 bis 250 besitzen.

8. Verfahren nach einem oder mehreren der Ansprüche 1 bis 7, dadurch gekennzeichnet, daß das aromatische Polyol entsprechend A(b) ein mehrwertiges, vorzugsweise zweiwertiges Phenol darstellt.

9. Verfahren nach einem oder mehreren der Ansprüche 1 bis 8, dadurch gekennzeichnet, daß es sich bei den aliphatischen Polyolen entsprechend A(c) um Polyalkylenglykole mit Molgewichten (Mw) von 600 bis 12000 handelt.

10. Verfahren nach einem oder mehreren der Ansprüche 1 bis 9, dadurch gekennzeichnet, daß die Menge an A(c) 4 bis 9 Gew.-%, bezogen auf das gesamte selbstemulgierende Epoxidharz, beträgt.

11. Verfahren nach einem oder mehreren der Ansprüche 1 bis 10, dadurch gekennzeichnet, daß bei dem Kondensationsprodukt c) das Äquivalentverhältnis der OH-Gruppen zu den Epoxidgruppen entweder c₁₎ 1:0,85 bis 1:1,5, insbesondere 1:0,95 bis 1:1,20 und das Epoxidäquivalentgewicht mindestens 100 000 oder c₂₎ das Äquivalentverhältnis 1:1,8 bis 1:3,5, insbesondere 1:2,0 bis 1:2,6 und das Epoxidäquivalentgewicht 400 bis 10000 betragen.

12. Verfahren nach einem oder mehreren der Ansprüche 1 bis 11, dadurch gekennzeichnet, daß die Menge an B) 30 bis 55 Gew.-% beträgt.

13. Verfahren nach einem oder mehreren der Ansprüche 1 bis 12, dadurch gekennzeichnet, daß die Menge an C) 2 bis 15 Gew.-% beträgt.

14. Verfahren nach einem oder mehreren der Ansprüche 1 bis 13, dadurch gekennzeichnet, daß als organische Lösungsmittel entsprechend C) Ethylenglykol-Mono- oder Diether, Propylenglykol-Mono- oder Diether, Butylenglykol-Mono- oder Diether von Monoalkoholen mit einem gegebenenfalls verzweigten Alkylrest von 1 bis 6 Kohlenstoffatomen, aliphatische Alkohole mit gegebenenfalls verzweigten Alkylresten von 1 bis 12 Kohlenstoffatomen, araliphatische und cycloaliphatische Alkohole, Aromaten oder Ketone einzeln oder im Gemisch eingesetzt werden.

15. Verfahren nach einem oder mehreren der Ansprüche 1 bis 14, dadurch gekennzeichnet, daß als D) basische oder saure Härtungsmittel dienen.

16. Verfahren nach Anspruch 15, dadurch gekennzeichnet, daß es sich bei den basischen Härtungsmitteln um Aminhärter aus der Gruppe Polyoxypropylenamine, Polyglycidylether-Aminaddukten oder Polyamidoaminen handelt, wobei diese Aminhärter im Äquivalentverhältnis Epoxidäquivalent:Aminwasserstoffäquivalent von 1 : (0,75 bis 1,5) verwendet werden.

17. Verfahren nach einem oder mehreren der Ansprüche 1 bis 16, dadurch gekennzeichnet, daß als D) weitere härtbare Harze der Gruppe Amin- und/oder Phenolharze eingesetzt werden.

18. Verfahren nach einem oder mehreren der Ansprüche 1 bis 17, dadurch gekennzeichnet, daß die mittlere Teilchengröße des selbstemulgierenden Epoxidharzes 0,3 bis 0,8 µm beträgt.

19. Verwendung der Epoxidharz-Dispersion, erhalten nach einem oder mehreren der Ansprüche 1 bis 18, zur Herstellung von Anstrichmaterialien, Überzügen, Formmassen und härtbaren Massen.

## Claims (Claims for the following Contracting State(s): AT, BE, CH, LI, DE, FR, GB, GR, IT, NL, SE)

1. An aqueous dispersion based on a self-emulsifying epoxy resin A), the dispersion containing, in addition to water B), optionally up to 15 % by weight, referred to the total dispersion, organic solvents C) and optionally normal additives D), with the self-emulsifying epoxy resin A) having an epoxy equivalent of between 250 and 10,000 and being a condensation product of
a) 50 to 80 % by weight of an epoxy compound containing at least two epoxy groups per molecule and having an epoxy equivalent of 100 to 2,000,
b) 35 to 17 % by weight of an aromatic polyol and
c) 15 to 3 % by weight of a condensation product of an aliphatic polyol with a mean molecular weight (Mw) of 200 to 20,000, an epoxy compound containing at least two epoxy groups per molecule and having an epoxy equivalent of 100 to 2,000, and of a mono and/or polyisocynate, the equivalent ratio of the OH groups to the epoxy groups being 1:0.85 to 1:3.5, the quantity of mono- and/or polyisocyanate being 0.05 to 5 % by weight, referred to the quantity of aliphatic polyol and epoxy compound, and the epoxy equivalent of said condensation product being between 200 and at least 50,000.

2. An epoxy resin dispersion as claimed in claim 1, wherein the quantity of the self-emulsifying epoxy resin is 20 to 70 % by weight, referred to the total dispersion, and the epoxy equivalent is 450 to 2,500.

3. An epoxy resin dispersion as claimed in claim 1 and/or 2, wherein the epoxy compounds corresponding to A(a) and A(c) are polyglycidyl ethers based on polyhydric, preferably dihydric phenols and/or novolaks or polyglycidyl esters of polycarboxylic acids.

4. An epoxy resin dispersion as claimed in claim 3, wherein the polyhydric phenol is bisphenol A.

5. An epoxy resin dispersion as claimed in claim 3 and/or 4, wherein the epoxy compounds have epoxy equivalents of 170 to 250.

6. An epoxy resin dispersion as claimed in one or more of the claims 1 to 5, wherein the aromatic polyol corresponding to A(b) is a polyhydric, preferably a dihydric, phenol.

7. An epoxy resin dispersion as claimed in one or more of the claims 1 to 6, wherein the aliphatic polyol corresponding to A(c) is a polyalkylene glycol having a molecular weight (Mw) of 600 to 12,000.

8. An epoxy resin dispersion as claimed in one or more of the claims 1 to 7, wherein the quantity of isocyanate is 0.1 to 1.0 % by weight, referred to aliphatic polyol and epoxy resin.

9. An epoxy resin dispersion as claimed in one or more of the claims 1 to 8, wherein the quantity of A(c) is 4 to 9 % by weight, referred to the total self-emulsifying epoxy resin.

10. An epoxy resin dispersion as claimed in one or more of the claims 1 to 8, wherein, in the condensation product c), the equivalent ratio of the OH groups to the epoxy groups is either c₁₎ 1:0.85 to 1:1.5, in particular 1:0.95 to 1:1.20, and the epoxy equivalent is at least 100,000 or C₂₎ the equivalent ratio is 1:1.8 to 1:3.5, in particular 1:2.0 to 1:2.6, and the epoxy equivalent is 400 to 10,000.

11. An epoxy resin dispersion as claimed in one or more of the claims 1 to 10, wherein the quantity of B) is 30 to 55 % by weight.

12. An epoxy resin dispersion according to one or more of the claims 1 to 11, wherein the quantity of C) is 2 to 15 % by weight.

13. An epoxy resin dispersion according to one or more of the claims 1 to 12, wherein ethylene glycol mono- or diethers, propylene glycol mono- or diethers, butylene glycol mono- or diethers of monoalcohols having an optionally branched alkyl radical containing 1 to 6 carbon atoms, aliphatic alcohols with optionally branched alkyl radicals containing 1 to 12 carbon atoms, araliphatic and cycloaliphatic alcohols, aromatic compounds or ketones are employed individually or as a mixture as organic solvents corresponding to C).

14. An epoxy resin dispersion as claimed in one or more of the claims 1 to 13, wherein basic or acidic hardeners serve as D).

15. An epoxy resin dispersion as claimed in claim 14, wherein the basic hardeners are amine hardeners from the group comprising polyoxypropylene amines, polyglycidyl ether/amine adducts or polyamidoamines, said amine hardeners being used in an epoxy : amine hydrogen equivalent ratio of 1:(0.75 to 1.5).

16. An epoxy resin dispersion as claimed in one or more of the claims 1 to 15, wherein further thermosetting resins from the group comprising amine and/or phenolic resins are employed as D).

17. An epoxy resin dispersion as claimed in one or more of the claims 1 to 16, wherein the mean particle size of the self-emulsifying epoxy resin is 0.3 to 0.8 µm.

18. A process for the preparation of the epoxy resin dispersion as claimed in one or more of the claims 1 to 17, with the self-emulsifying epoxy resin A) being first prepared by condensation of the three components A(a), A(b) and A(c) at elevated temperatures in the presence of a condensation catalyst and optionally of organic solvents C), optionally further organic solvents C) are subsequently added and then appropriate quantities of water B) and also the compounds corresponding to D) are added at 30 to 100°C with vigorous stirring to the solution thus obtained.

19. The process as claimed in claim 18, wherein the condensation is carried out at temperatures of 120 to 220°C, and wherein the organic solvent C) is added at temperatures of 20 to 220°C.

20. The process as claimed in claim 18 and/or 19, wherein the addition of the compounds corresponding to D) is carried out only immediately before use.

21. The use of the epoxy resin dispersions as claimed in one or more of the claims 1 to 17 for the preparation of painting materials, coatings, molding compounds, and thermosetting materials.

## Claims (Claims for the following Contracting State(s): ES)

1. A process for the preparation of an aqueous dispersion based on a self-emulsifying epoxy resin A), the dispersion containing, in addition to water B), optionally up to 15 % by weight, referred to the total dispersion, organic solvents C) and optionally usual additives D) with the self-emulsifying epoxy resin A) having an epoxy equivalent between 250 and 10,000 and being a condensation product of
a) 50 to 80 % by weight of an epoxy compound containing at least two epoxy groups per molecule and having an epoxy equivalent of 100 to 2,000
b) 35 to 17 % by weight of an aromatic polyol and
c) 15 to 3 % by weight of a condensation product of an aliphatic polyol with a mean molecular weight (Mw)of 200 to 20,000, an epoxy compound containing at least two epoxy groups per molecule and having an epoxy equivalent of 100 to 2,000, as well as a mono and/or polyisocynate, the equivalent ratio of the OH groups to the epoxy groups being 1:0.85 to 1:3.5, the quantity of mono and/or polyisocyanate being 0.05 to 5 % by weight, referred to the quantity of aliphatic polyol and epoxy compound, and the epoxy equivalent of said condensation product being between 200 and at least 50,000,
with the self-emulsifying epoxy resin A) being first prepared by condensation of the three components A(a), A(b) and A(c) at elevated temperatures in the presence of a condensation catalyst and optionally of organic solvents C), with further organic solvents C) being optionally added thereafter, and then appropriate quantities of water B) and also the compounds corresponding to D) are added at 30 to 100°C by vigorously stirring the solution thus obtained.

2. The process as claimed in claim 1, wherein the condensation is carried out at temperatures of 120 to 220°C, and the organic solvent C) is added at temperatures of 20 to 220°C.

3. The process as claimed in claim 1 and/or 2, wherein the addition of the compounds corresponding to D) is done only immediately before use.

4. The process as claimed in one or more of claims 1 to 3, wherein the quantity of the self-emulsifying epoxy resin is 20 to 70 % by weight, referred to the total dispersion, and the epoxy equivalent is 450 to 2,500.

5. The process as claimed in one or more of claims 1 to 4, wherein the epoxy compounds corresponding to A(a) and A(c) are polyglycidyl ethers based on polyhydric, preferably dihydric phenols and/or novolaks or polyglycidyl esters of polycarboxylic acids.

6. The process as claimed in claim 5, wherein the polyhydric phenol is bisphenol A.

7. The process as claimed in claim 5 and/or 6, wherein the epoxy compounds have equivalents of 170 to 250.

8. The process as claimed in one or more of claimes 1 to 7, wherein the aromatic polyol corresponding to A(b) is a polyhydric, preferably a dihydric phenol.

9. The process as claimed in one or more of claims 1 to 8, wherein the aliphatic polyol corresponding to A(c) is a polyalkylene glycol having a molecular weight (Mw) of 600 to 12,000.

10. The process as claimed in one or more of claims 1 to 9, wherein the quantity of A(c) is 4 to 9 % by weight, referred to the total self-emulsifying epoxy resin.

11. The process as claimed in one or more of claims 1 to 10, wherein in the condensation product c) the equivalent ratio of the OH groups to the epoxy groups is either c₁₎ 1:0,85 to 1:1,5, in particular 1:0,95 to 1:1,20 and the epoxy equivalent is at least 100,000 or c₂₎ the equivalent ratio is 1:1,8 to 1:3,5, in particular 1:2,0 to 1:2,6, and the epoxy equivalent is 400 to 10,000.

12. The process as claimed in one or more of claims 1 to 11, wherein the quantity of B) is 30 to 55 % by weight.

13. The process as claimed in one or more of claims 1 to 12, wherein the quantity of C) is 2 to 15 % by weight.

14. The process as claimed in one or more of claims 1 to 13, wherein ethylene glycol mono- or diethers, propylene glycol mono- or diethers, butylene glycol mono- or diethers of monoalcohols having an optionally branched alkyl radical containing 1 to 6 carbon atoms, aliphatic alcohols with optionally branched alkyl radicals containing 1 to 12 carbon atoms, araliphatic and cycloaliphatic alcohols, aromatic compounds or ketones are employed individually or as a mixture as organic solvents corresponding to C).

15. The process as claimed in one or more of claims 1 to 14, wherein basic or acidic hardeners serve as D).

16. The process as claimed in claim 15, wherein the basic hardeners are amine hardeners from the group comprising plyoxypropylene amines, polyglycidyl ether/amine adducts or polyamidoamines, said amine hardeners being used in an epoxy : amine hydrogen equivalent ratio of 1:(0.75 to 1.5).

17. The process as claimed in one or more of claimes 1 to 16, wherein further thermosetting resins from the group comprising amine and/or phenolic resins are employed as D).

18. The process as claimed in one or more of claimes 1 to 17, wherein the mean particle size of the self-emulsifying epoxy resin is 0.3 to 0.8 µm.

19. The use of the epoxy resin dispersion obtained according to one or more of claims 1 to 18 for the preparation of painting material, coatings, molding compounds, and thermosetting materials.

## Revendications (Revendications pour l'(les) Etat(s) contractant(s) suivant(s): AT, BE, CH, LI, DE, FR, GB, GR, IT, NL, SE)

1. Dispersion aqueuse à base d'une résine époxyde auto-émulsionnante A), où la dispersion, outre de l'eau B), contient éventuellement jusqu'à 15 % en poids, par rapport à la dispersion totale, de solvants organiques C) et éventuellement d'additifs usuels D), où la résine époxyde auto-émulsionnante A) présente une masse équivalente d'époxyde de 250 à 10 000 et représente un produit de condensation
a) de 50 à 80 % en poids d'un composé époxydique ayant au moins deux groupes époxy par molécule et une masse équivalente d'époxyde de 100 à 2000,
b) de 35 à 17 % en poids d'un polyol aromatique, et
c) de 15 à 3 % en poids d'un produit de condensation d'un polyol aliphatique ayant une masse moléculaire moyenne (M̅w) de 200 à 20 000, d'un composé époxydique ayant au moins deux groupes époxy par molécule et une masse équivalente d'époxyde de 100 à 2000, ainsi que d'un mono- et/ou polyisocyanate, le rapport entre équivalents des groupes OH aux groupes époxy étant de 1:0,85 à 1:3,5, la quantité du mono- et/ou du polyisocyanate étant de 0,05 à 5 % en poids par rapport à la somme du polyol aliphatique et du composé époxydique, et la masse équivalente d'époxyde de ce produit de condensation étant comprise entre 200 et au moins 50 000.

2. Dispersion de résine époxyde selon la revendication 1, caractérisée en ce que la quantité de la résine époxyde auto-émulsionnante est de 20 à 70 % en poids par rapport à la dispersion totale, et la masse équivalente d'époxyde est de 450 à 2500.

3. Dispersion de résine époxyde selon la revendication 1 et/ou 2, caractérisée en ce que, pour ce qui concerne les composés époxydiques correspondant à A(a) et A(c), il s'agit d'éthers polyglycidyliques de polyphénol, de préférence de diphénol, et/ou de novolaques ou d'esters polyglycidyliques d'acides polycarboxyliques.

4. Dispersion de résine époxyde selon la revendication 3, caractérisée en ce que, pour ce qui concerne les polyphénols, il s'agit du bisphénol A.

5. Dispersion de résine époxyde selon la revendication 3 et/ou 4, caractérisée en ce que les composés époxydiques ont une masse équivalente d'époxyde de 170 à 250.

6. Dispersion de résine époxyde selon l'une ou plusieurs des revendications 1 à 5, caractérisée en ce que le polyol aromatique correspondant à A(b) est un polyphénol, de préférence un diphénol.

7. Dispersion de résine époxyde selon l'une ou plusieurs des revendications 1 à 6, caractérisée en ce que, pour ce qui est des polyols aliphatiques correspondant à A(c), il s'agit de polyalkylèneglycols ayant une masse moléculaire (Mw) de 600 à 12 000.

8. Dispersion de résine époxyde selon l'une ou plusieurs des revendications 1 à 7, caractérisée en ce que la quantité d'isocyanate est de 0,1 à 1,0 % en poids par rapport à la somme du polyol aliphatique et de la résine époxyde.

9. Dispersion de résine époxyde selon l'une ou plusieurs des revendications 1 à 8, caractérisée en ce que la quantité de A(c) est de 4 à 9 % en poids par rapport à la totalité de la résine époxyde auto-émulsionnante.

10. Dispersion de résine époxyde selon l'une ou plusieurs des revendications 1 à 8, caractérisée en ce que, dans le produit de condensation c), le rapport entre équivalents des groupes OH aux groupes époxyde est soit c₁) de 1:0,85 à 1:1,5, en particulier de 1:0,95 à 1:1,20, et la masse équivalente d'époxyde est d'au moins 100 000, soit c₂) le rapport entre équivalents est de 1:1,8 à 1:3,5 et en particulier de 1:2,0 à 1:2,6, et la masse équivalente d'époxyde est de 400 à 10 000.

11. Dispersion de résine époxyde selon l'une ou plusieurs des revendications 1 à 10, caractérisée en ce que la quantité de B) est de 30 à 55 % en poids.

12. Dispersion de résine époxyde selon l'une ou plusieurs des revendications 1 à 11, caractérisée en ce que la quantité de C) est de 2 à 15 % en poids.

13. Dispersion de résine époxyde selon l'une ou plusieurs des revendications 1 à 12, caractérisée en ce qu'on utilise comme solvant organique selon C) un monoéther ou un diéther de l'éthylèneglycol, un monoéther ou un diéther du propylèneglycol, un monoéther ou un diéther du butylèneglycol de monoalcools ayant un radical alkyle éventuellement ramifié, ayant de 1 à 6 atomes de carbone, les alcools aliphatiques contenant des radicaux alkyle éventuellement ramifiés et ayant de 1 à 12 atomes de carbone, les alcools araliphatiques et cycloaliphatiques, les composés aromatiques ou les cétones, seuls ou en mélange.

14. Dispersion de résine époxyde selon l'une ou plusieurs des revendications 1 à 13, caractérisée en ce qu'on utilise comme D) des durcisseurs basiques ou acides.

15. Dispersion de résine époxyde selon la revendication 14, caractérisée en ce que, pour ce qui concerne les durcisseurs basiques, il s'agit de durcisseurs à base d'amine choisis dans le groupe comprenant les polyoxypropylène-amines, les produits d'addition d'un éther polyglycidylique et d'une amine ou les polyamidoamines, ces durcisseurs à base d'amine étant utilisés selon un rapport entre équivalents de l'époxyde à l'hydrogène d'amine de 1:(0,75 à 1,5).

16. Dispersion de résine époxyde selon l'une ou plusieurs des revendications 1 à 15, caractérisée en ce qu'on utilise comme D) d'autres résines durcissables choisies parmi l'ensemble comprenant les résines d'amine et/ou phénoliques.

17. Dispersion de résine époxyde selon l'une ou plusieurs des revendications 1 à 16, caractérisée en ce que la granulométrie moyenne de la résine époxyde autoémulsionnante est de 0,3 à 0,8 µm.

18. Procédé pour préparer la dispersion de résine époxyde selon l'une ou plusieurs des revendications 1 à 17, dans lequel on prépare d'abord la résine époxyde auto-émulsionnante A) par condensation des trois constituants A(a), A(b) et A(c), à haute température en présence d'un catalyseur de condensation et éventuellement de solvants organiques C), puis on ajoute éventuellement d'autres solvants organiques C), puis on ajoute à la solution ainsi obtenue, sous vigoureuse agitation et à une température de 30 à 100°C, la quantité correspondante d'eau B) et éventuellement les composés correspondant à D).

19. Procédé selon la revendication 18, caractérisé en ce que la condensation est effectuée à des températures de 120 à 220°C et que le solvant organique C) est ajouté à des températures de 120 à 220°C.

20. Procédé selon la revendication 18 et/ou 19, caractérisé en ce que l'addition des composés selon D) n'est effectuée qu'immédiatement avant l'utilisation.

21. Utilisation de la dispersion de résine époxyde selon l'une ou plusieurs des revendications 1 à 17 pour préparer des peintures, des revêtements, des mélanges à mouler et des compositions durcissables.

## Revendications (Revendications pour l'(les) Etat(s) contractant(s) suivant(s): ES)

1. Procédé pour préparer une dispersion aqueuse à base d'une résine époxyde auto-émulsionnante A), où la dispersion, outre de l'eau B), contient éventuellement jusqu'à 15 % en poids, par rapport à la dispersion totale, de solvants organiques C) et éventuellement d'additifs usuels D), où la résine époxyde auto-émulsionnante A) présente une masse équivalente d'époxyde de 250 à 10 000 et représente un produit de condensation
a) de 50 à 80 % en poids d'un composé époxydique ayant au moins deux groupes époxy par molécule et une masse équivalente d'époxyde de 100 à 2000,
b) de 35 à 17 % en poids d'un polyol aromatique, et
c) de 15 à 3 % en poids d'un produit de condensation d'un polyol aliphatique ayant une masse moléculaire moyenne (M̅w) de 200 à 20 000, d'un composé époxydique ayant au moins deux groupes époxy par molécule et une masse équivalente d'époxyde de 100 à 2000, ainsi que d'un mono- et/ou polyisocyanate, le rapport entre équivalents des groupes OH aux groupes époxy étant de 1:0,85 à 1:3,5, la quantité du mono- et/ou du polyisocyanate étant de 0,05 à 5 % en poids par rapport à la somme du polyol aliphatique et du composé époxydique, et la masse équivalente d'époxyde de ce produit de condensation étant comprise entre 200 et au moins 50 000,
dans lequel on prépare d'abord la résine époxyde auto-émulsionnante A) par condensation des trois constituants A(a), A(b) et A(c), à haute température en présence d'un catalyseur de condensation et éventuellement de solvants organiques C), puis on ajoute éventuellement d'autres solvants organiques C), puis on ajoute à la solution ainsi obtenue, sous vigoureuse agitation et à une température de 30 à 100°C, la quantité correspondante d'eau B) et éventuellement les composés correspondant à D).

2. Procédé selon la revendication 1, caractérisé en ce que la condensation est effectuée à des températures de 120 à 220°C et que le solvant organique C) est ajouté à des températures de 120 à 220°C.

3. Procédé selon la revendication 1 et/ou 2, caractérisé en ce que l'addition des composés selon D) n'est effectuée qu'immédiatement avant l'utilisation.

4. Procédé selon l'une ou plusieurs des revendications 1 à 3, caractérisé en ce que la quantité de la résine époxyde auto-émulsionnante est de 20 à 70 % en poids par rapport à la dispersion totale, et la masse équivalente d'époxyde est de 450 à 2500.

5. Procédé selon l'une ou plusieurs des revendications 1 à 4, caractérisé en ce que, pour ce qui concerne les composés époxydiques correspondant à A(a) et A(c), il s'agit d'éthers polyglycidyliques de polyphénol, de préférence de diphénol, et/ou de novolaques ou d'esters polyglycidyliques d'acides polycarboxyliques.

6. Procédé selon la revendication 5, caractérisé en ce que, pour ce qui concerne les polyphénols, il s'agit du bisphénol A.

7. Procédé selon la revendication 5 et/ou 6, caractérisé en ce que les composés époxydiques ont une masse équivalente d'époxyde de 170 à 250.

8. Procédé selon l'une ou plusieurs des revendications 1 à 7, caractérisé en ce que le polyol aromatique correspondant à A(b) est un polyphénol, de préférence un diphénol.

9. Procédé selon l'une ou plusieurs des revendications 1 à 8, caractérisé en ce que, pour ce qui est des polyols aliphatiques correspondant à A(c), il s'agit de polyalkylèneglycols ayant une masse moléculaire (Mw) de 600 à 12 000.

10. Procédé selon l'une ou plusieurs des revendications 1 à 9, caractérisé en ce que la quantité de A(c) est de 4 à 9 % en poids par rapport à la totalité de la résine époxyde auto-émulsionnante.

11. Procédé selon l'une ou plusieurs des revendications 1 à 10, caractérisé en ce que, dans le produit de condensation c), le rapport entre équivalents des groupes OH aux groupes époxyde est soit c₁) de 1:0,85 à 1:1,5, en particulier de 1:0,95 à 1:1,20, et la masse équivalente d'époxyde est d'au moins 100 000, soit c₂) le rapport entre équivalents est de 1:1,8 à 1:3,5 et en particulier de 1:2,0 à 1:2,6, et la masse équivalente d'époxyde est de 400 à 10 000.

12. Procédé selon l'une ou plusieurs des revendications 1 à 11, caractérisé en ce que la quantité de B) est de 30 à 55 % en poids.

13. Procédé selon l'une ou plusieurs des revendications 1 à 12, caractérisé en ce que la quantité de C) est de 2 à 15 % en poids.

14. Procédé selon l'une ou plusieurs des revendications 1 à 13, caractérisé en ce qu'on utilise comme solvant organique selon C) un monoéther ou un diéther de l'éthylèneglycol, un monoéther ou un diéther du propylèneglycol, un monoéther ou un diéther du butylèneglycol de monoalcools ayant un radical alkyle éventuellement ramifié, ayant de 1 à 6 atomes de carbone, les alcools aliphatiques contenant des radicaux alkyle éventuellement ramifiés et ayant de 1 à 12 atomes de carbone, les alcools araliphatiques et cycloaliphatiques, les composés aromatiques ou les cétones, seuls ou en mélange.

15. Procédé selon l'une ou plusieurs des revendications 1 à 14, caractérisé en ce qu'on utilise comme D) des durcisseurs basiques ou acides.

16. Procédé selon la revendication 15, caractérisé en ce que, pour ce qui concerne les durcisseurs basiques, il s'agit de durcisseurs à base d'amine choisis dans le groupe comprenant les polyoxypropylène-amines, les produits d'addition d'un éther polyglycidylique et d'une amine ou les polyamidoamines, ces durcisseurs à base d'amine étant utilisés selon un rapport entre équivalents de l'époxyde à l'hydrogène d'amine de 1:(0,75 à 1,5).

17. Procédé selon l'une ou plusieurs des revendications 1 à 16, caractérisé en ce qu'on utilise comme D) d'autres résines durcissables choisies parmi l'ensemble comprenant les résines d'amine et/ou phénoliques.

18. Procédé selon l'une ou plusieurs des revendications 1 à 17, caractérisé en ce que la granulométrie moyenne de la résine époxyde auto-émulsionnante est de 0,3 à 0,8 µm.

19. Utilisation de la dispersion de résine époxyde obtenue selon l'une ou plusieurs des revendications 1 à 18 pour préparer des peintures, des revêtements, des mélanges à mouler et des compositions durcissables.
